Europäisches Patentamt

European Patent Office

Office européen des brevets

(19)

(11)  **EP 1 321 938 A1**

(12)  # DEMANDE DE BREVET EUROPEEN

(43)  Date de publication:
**25.06.2003  Bulletin 2003/26**

(51)  Int Cl.7: **G11B 20/10**, G11B 20/14

(21)  Numéro de dépôt: **02293027.5**

(22)  Date de dépôt: **06.12.2002**

(84)  Etats contractants désignés:
**AT BE BG CH CY CZ DE DK EE ES FI FR GB GR IE IT LI LU MC NL PT SE SI SK TR**
Etats d'extension désignés:
**AL LT LV MK RO**

(30)  Priorité: **18.12.2001  FR 0116380**

(71)  Demandeur: **STMicroelectronics S.A.**
**92120 Montrouge (FR)**

(72)  Inventeur: **Graffouliere, Philippe**
**38000 Grenoble (FR)**

(74)  Mandataire: **Loisel, Bertrand**
**Cabinet Plasseraud,**
**84, rue d'Amsterdam**
**75440 Paris Cédex 09 (FR)**

(54)  **Procédé et dispositif pour evaluer des longueurs de symboles sur un support d'enregistrement**

(57)  Pour évaluer une longueur de symbole à partir d'une réception d'une longueur de premier symbole et d'une erreur de phase sur une détection de longueur du premier symbole avant réception d'une longueur de deuxième symbole qui suit le premier symbole, le procédé comprend:

- une première étape (23, 37) pour évaluer au moins deux erreurs aléatoires de phase à partir de l'erreur de phase reçue, une première erreur aléatoire de phase étant fonction d'une erreur déterministe de phase pour un premier état correspondant à une absence de correction de longueur de premier symbole, une deuxième erreur aléatoire de phase étant fonction d'une erreur déterministe de phase pour un deuxième état correspondant à une correction de longueur de premier symbole;

- une deuxième étape (31, 38) pour retenir comme longueur de symbole évaluée la longueur de premier symbole reçue si la valeur absolue de la première erreur aléatoire de phase minimise une condition pour faire passer par le premier état et pour retenir comme longueur de symbole évaluée la longueur de premier symbole corrigée si la valeur absolue de la deuxième erreur aléatoire de phase minimise ladite condition pour faire passer par le deuxième état.

Fig.5

EP 1 321 938 A1

**Description**

Le domaine de l'invention est celui de la restitution d'informations codées sur un support d'enregistrement.

Les performances technologiques évoluent constamment vers une densité croissante de stockage et vers une rapidité croissante de lecture du support d'enregistrement. La forte densité d'informations et la grande rapidité de lecture font intervenir de façon particulièrement aiguë la bande passante du canal de transmission entre le support d'enregistrement et le dispositif de restitution des informations stockées en vue de leur utilisation.

Des solutions ont été développées avec succès pour des applications de communication et pour des supports d'enregistrement magnétique. Par exemple, le codage d'informations sur disques dur utilise souvent les codes connus à réponse partielle (PR pour partial response en anglais). Ce sont des codes multiniveaux dont le spectre du signal de lecture est facilement adaptable au canal de transmission pour une vitesse de défilement donnée. Le dispositif de restitution utilise alors un décodage à maximum de vraisemblance (ML pour maximum likelihood en anglais). Les différents niveaux du signal transmis sous forme analogique sont convertis en signal numérique par échantillonnages au moyen d'un convertisseur analogique numérique (ADC pour analog digital converter en anglais) à plusieurs bits. Cependant, ces systèmes nommés PRML, mettent en oeuvre un filtrage numérique qui ne permet pas d'utiliser un convertisseur ADC à un bit unique.

Pour obtenir une haute densité de stockage sur le support d'information, on envisage de coder l'information au moyens de symboles de différentes longueurs sur deux aspects possibles de surface du support. Par exemple sur un disque optique, une présence et une absence de trou réfléchissent différemment un rayon lumineux provoquant une modulation binaire de signal de transmission. Ceci permet de coder un symbole au moyen d'un trou dont la longueur est représentative de ce symbole et de coder directement le symbole suivant au moyen d'une absence de trou dont la longueur est elle aussi représentative de ce symbole suivant. Il est ainsi possible une succession de symboles sur le support par une succession de trous et d'absence de trous sans perdre de place. La longueur de symbole est obtenue directement sous forme numérique par comptage de périodes d'horloge sur un même aspect de surface du support, puis de façon semblable sur un même aspect complémentaire pour le symbole suivant. Il serait alors intéressant d'utiliser un convertisseur ADC simple à un seul bit.

Cependant, l'évaluation de longueurs de symboles est perturbée par de nombreux phénomènes, la fonction de transfert du canal de transmission, sa sensibilité au bruit de nature aléatoire et l'interférence inter symboles. L'interférence entre symboles, bien que ne dépassant généralement pas deux symboles, est particulièrement aiguë pour des longueurs de symboles de l'ordre de 0,42 µm avec un diamètre de faisceau de lecture de l'ordre de 0,74 µm.

Les dispositifs de l'état connu de la technique, nécessitent un calibrage particulièrement soigné et engendrent des contraintes dans la conception des moyens analogiques et dans leur paramétrisation.

Pour remédier aux inconvénients de l'état connu de la technique, l'invention propose un procédé pour évaluer une longueur de symbole à partir d'une réception d'une longueur de premier symbole et d'une erreur de phase sur une détection de longueur du premier symbole avant réception d'une longueur de deuxième symbole qui suit le premier symbole. Le procédé est remarquable en ce qu'il comprend:

-    une première étape pour évaluer au moins deux erreurs aléatoires de phase à partir de l'erreur de phase reçue, une première erreur aléatoire de phase étant fonction d'une erreur déterministe de phase pour un premier état correspondant à une absence de correction de longueur de premier symbole, une deuxième erreur aléatoire de phase étant fonction d'une erreur déterministe de phase pour un deuxième état correspondant à une correction de longueur de premier symbole;
-    une deuxième étape pour retenir comme longueur de symbole évaluée la longueur de premier symbole reçue si la valeur absolue de la première erreur aléatoire de phase minimise une condition pour faire passer par le premier état et pour retenir comme longueur de symbole évaluée la longueur de premier symbole corrigée si la valeur absolue de la deuxième erreur aléatoire de phase minimise ladite condition pour faire passer par le deuxième état.

Plus particulièrement dans la première étape, la première erreur déterministe de phase pour un premier état correspondant à une absence de correction de longueur de premier symbole, est prise égale à une différence entre une erreur systématique de phase en fin de premier symbole et une erreur systématique de phase en début de deuxième symbole de longueurs non corrigées, la deuxième erreur déterministe de phase pour un deuxième état correspondant à une correction de longueur de premier symbole, est prise égale à une différence entre une erreur systématique de phase en fin de premier symbole et une erreur systématique de phase en début de deuxième symbole de longueurs corrigées respectivement par augmentation et diminution d'une période d'horloge.

Le procédé est amélioré lorsque:

-    dans la première étape sont évaluées pour un événement courant, huit erreurs aléatoires de phase dont quatre sont fonction d'une erreur déterministe de phase pour chacun de quatre premiers états correspondant à une absence de correction de longueur de premier symbole, dont quatre sont fonction d'une erreur déterministe de phase pour chacun de quatre deuxièmes états correspondant à une correction de longueur de premier symbole;

- dans la deuxième étape, la longueur de symbole retenue pour un événement précédent est celle correspondant à l'état de l'événement précédent pour lequel un cumul de valeurs absolue d'erreurs aléatoires pour chaque état d'événement allant de l'événement précédent à l'événement courant, est minimal.

Avantageusement, l'erreur aléatoire de phase associée à la longueur de symbole retenue, est utilisée pour ajuster une phase d'horloge servant à détecter la longueur de premier symbole.

Le procédé est encore amélioré lorsque le cumul de valeur absolue d'erreur aléatoire de phase est augmenté pour chaque état d'événement correspondant à une longueur de premier symbole en dehors d'un intervalle de longueurs admissibles.

L'invention propose aussi un dispositif pour évaluer une longueur de symbole comprenant un composant de correction agencé pour recevoir en entrée une longueur de premier symbole et une erreur de phase sur une détection de longueur du premier symbole puis pour recevoir une longueur de deuxième symbole qui suit le premier symbole. Le dispositif est remarquable en ce que le composant de correction comprend:

- un premier sous composant agencé pour évaluer au moins deux erreurs aléatoires de phase à partir de l'erreur de phase reçue, une première erreur aléatoire de phase étant fonction d'une erreur déterministe de phase pour un premier état correspondant à une absence de correction de longueur de premier symbole, une deuxième erreur aléatoire de phase étant fonction d'une erreur déterministe de phase pour un deuxième état correspondant à une correction de longueur de premier symbole;
- un deuxième sous composant agencé pour retenir comme longueur de symbole évaluée la longueur de premier symbole reçue si la valeur absolue de la première erreur aléatoire de phase minimise une condition pour faire passer par le premier état et pour retenir comme longueur de symbole évaluée la longueur de premier symbole corrigée si la valeur absolue de la deuxième erreur aléatoire de phase minimise ladite condition pour faire passer par le deuxième état.

Plus particulièrement, le dispositif comprend un troisième sous-composant contenant au moins pour chaque longueur de symbole possible une erreur systématique de phase en fin de premier symbole et une erreur systématique de phase en début de deuxième symbole. Le premier sous-composant est alors agencé pour calculer la première erreur déterministe de phase par différence entre deux erreurs systématiques de phase contenues dans le sous composant pour des longueurs non corrigées, et pour calculer la deuxième erreur déterministe de phase par différence entre deux erreurs systématiques de phase contenues dans le troisième sous composant pour des longueurs corrigées par augmentation et diminution d'une période d'horloge respectivement de longueur de premier et de deuxième symbole.

Le dispositif est amélioré lorsque :

- le premier sous-composant est agencé pour évaluer relativement à un événement courant, huit erreurs aléatoires de phase dont quatre sont fonction d'une erreur déterministe de phase pour chacun de quatre premiers états correspondant à une absence de correction de longueur de premier symbole, dont quatre sont fonction d'une erreur déterministe de phase pour chacun de quatre deuxièmes états correspondant à une correction de longueur de premier symbole;
- le deuxième sous-composant est agencé pour retenir la longueur de symbole correspondant à l'état d'un événement précédent pour lequel est minimal le contenu d'au moins un mot tel que le premier sous-composant est agencé pour y cumuler des valeurs absolue d'erreurs aléatoires de phase pour chaque état d'événement allant de l'événement précédent à l'événement courant.

Avantageusement, le deuxième sous-composant est agencé pour générer une valeur d'erreur aléatoire de phase associée à la longueur de symbole retenue, utilisable pour ajuster une phase d'horloge dans un composant à verrouillage de phase agencé pour transmettre la longueur de premier symbole au composant de correction.

Le dispositif est encore amélioré lorsque le sous-composant est agencé pour augmenter le contenu de chaque mot pour chaque état d'événement correspondant à une longueur de premier symbole en dehors d'un intervalle de longueurs admissibles.

L'invention est illustrée par les exemples de mise en oeuvre décrits en détails ci-après en référence aux dessins annexés dans lesquels :

- la figure 1 montre un système de lecture de support préenregistré ;
- la figure 2 montre un principe de codage de support préenregistré ;

- la figure 3 montre un agencement de composants conforme à l'invention ;
- la figure 4 montre un signal à traiter utilement au moyen de l'invention ;
- la figure 5 des étapes de procédé conforme à l'invention ;
- les figures 6 à 14 montrent des étapes de procédé amélioré selon l'invention ;
- la figure 15 montre un composant de correction conforme à l'invention.

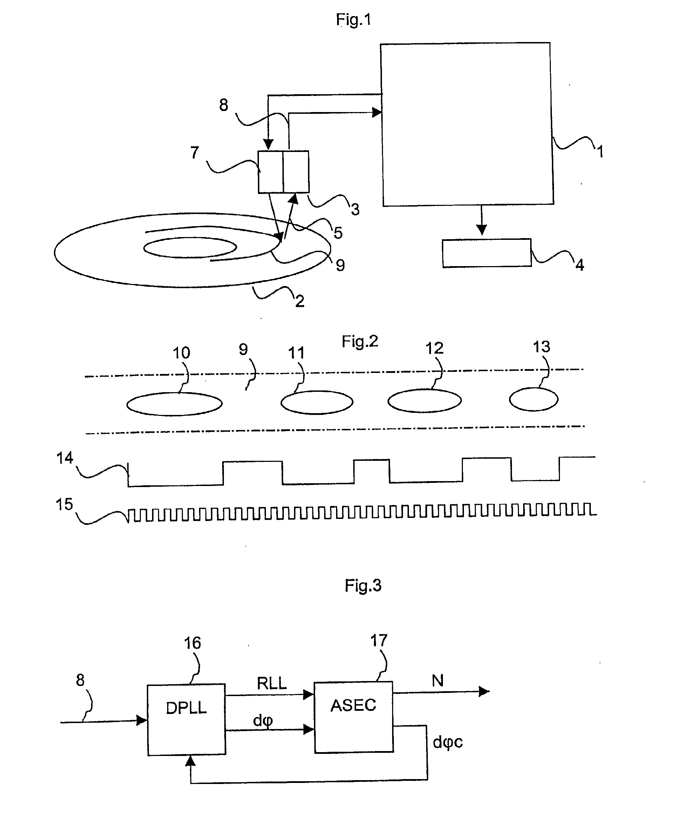

En référence à la figure 1, un système pour lire des informations sur un support préenregistré 2, comprend une tête de lecture 3 et un circuit intégré 1 pour ranger dans un registre 4, les informations lues. Dans l'exemple de la figure 1, le support préenregistré est un disque laser tel qu'un CD (acronyme connu des termes anglais compact disk) ou un DVD (acronyme connu des termes anglais digital video disk). Le support 2 comprend une piste 9 suivie par la tête de lecture 3 au moyen d'un micro-mécanisme connu non représenté. Une tête émettrice 7, solidaire de la tête de lecture 3, émet de façon connue un faisceau de lumière laser incident dont la réflexion sur la piste 9 génère un faisceau de lumière 5 reçu par la tête de lecture 3.

En référence à la figure 2, la piste 9 du support 2, comprend une succession de trous oblongs 10, 11, 12, 13. Une présence de trou correspond à un premier niveau, par exemple bas, d'une variable binaire 14. Une absence de trou correspond au deuxième niveau, par exemple haut, de la variable binaire 14. Chaque longueur d'alternance de la variable 14 représente un symbole de valeur déterminée par une longueur de trou ou par une longueur qui sépare deux trous. Cette longueur est mesurée en quantité de périodes d'une horloge spatiale 15. La variable binaire 14 est évaluée par un signal 8 dont le niveau est fonction du faisceau de lumière laser selon qu'il résulte d'une réflexion de faisceau incident dans un trou ou entre deux trous. La variation temporelle du signal 8 est représentative de la variation spatiale de la variable 14 par intégration dans le temps en fonction de la vitesse linéaire de défilement du support 2 sous la tête de lecture 3. C'est à dire que la longueur spatiale d'un symbole est mesurable sur le signal 8, en quantité de périodes d'une horloge temporelle, directement liées à la vitesse de défilement du support 2 sous la tête de lecture 3. L'horloge temporelle peut être générée par exemple par une gravure de l'horloge spatiale 15 dans un sillon du support 2 qui suit la piste 9. La gravure est généralement de période égale à un nombre entier de périodes d'horloge spatiale dont la fréquence est restituée par multiplication de fréquence d'une composante du signal 8, représentative de variations de cette gravure.

En référence à la figure 3, le circuit intégré 1 comprend un composant à verrouillage de phase 16 agencé pour recevoir en entrée le signal 8. Le composant à verrouillage de phase 16 dispose d'une boucle à verrouillage de phase pour compter de façon connue la quantité de périodes d'horloge par niveau du signal 8 de façon à restituer une longueur RLL pour chaque niveau, représentative d'une longueur de symbole telle que donnée par la variable 14.

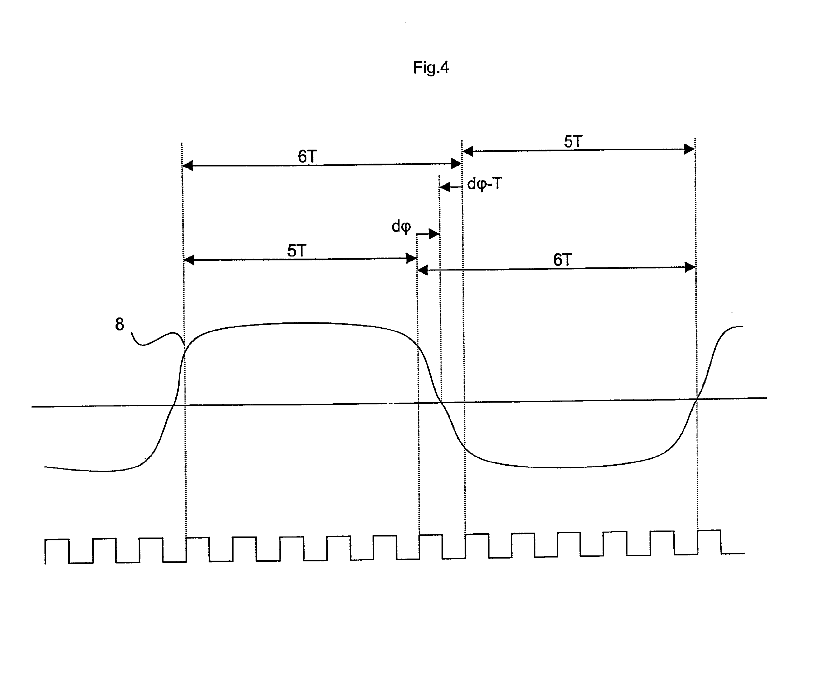

Cependant, la bande passante du canal de transmission entre la piste 9 et l'entrée du composant à verrouillage de phase 16, résulte d'une modulation du faisceau réfléchi 5, d'une fonction de transfert de la tête de lecture 3 puis d'une modulation du signal 8 reçu tel que représenté sur la figure 4. Le signal 8 dont les fronts de variation et l'amplitude ne constituent pas une image rigoureuse de la variable 14, est générateur d'erreurs sur les détections de longueur de symboles telles que données par la variable 14, c'est à dire par la succession de trous et d'absences de trou entre deux trous sur la piste 9. Les fronts avachis de montée et de descente du signal 8, conjugués à une amplitude plus faible pour une courte longueur de symbole, font que les passages de franchissement d'une valeur médiane entre deux niveaux extrêmes possibles du signal 8, ne sont pas rigoureusement en phase avec les fronts d'horloges dont la quantité de périodes mesure chaque longueur de symbole. Il en résulte une incertitude sur la détection de longueur de symbole.

Cette incertitude est illustrée sur la figure 4 où deux alternances complètes du signal 8 sont représentatives de deux symboles successifs. Le nombre entier de périodes d'horloge avant franchissement de la valeur médiane par la première alternance complète du signal 8, étant de cinq, le composant à verrouillage de phase 16 donne ici une longueur de 5T pour le premier symbole avec une erreur de phase dφ qui résulte du franchissement effectif de la valeur médiane par le signal 8 avec un retard de dφ. La boucle à verrouillage de phase du composant 16 associe le franchissement de la valeur médiane au front d'horloge le plus proche. Le nombre entier de périodes d'horloge avant franchissement de la valeur médiane par la deuxième alternance complète du signal 8, étant de six, le composant à verrouillage de phase 16 donne ici une longueur de 6T pour le deuxième symbole. Avant réajustement par la boucle à verrouillage de phase, on observe sur la figure 4 une alternative possible d'évaluation de longueur du premier symbole à 6T avec une erreur de phase égale à dφ-2π. Pour conserver une longueur totale de deux symbole successifs, la longueur du deuxième symbole débutant alors une période T d'horloge plus tard, devrait être évaluée à 5T.

Le composant à verrouillage de phase 16, utilisant comme seul critère |dφ|<|dφ-2π|, n'est pas agencé pour décider si la deuxième alternative est plus représentative de la variable 14.

Selon l'invention en référence à la figure 3, le circuit intégré 1 comprend un composant de correction 17 qui reçoit en entrée chaque longueur de symbole RLL et chaque erreur de phase dφ associée, détectées par le composant à verrouillage de phase 16. A partir des valeurs reçues en entrée pour une succession de symboles, le composant de correction 17 génère à destination du registre 4, une succession de longueurs estimées N, tel qu'expliqué à présent dans la suite de la description. Le composant de correction 17 est aussi agencé pour générer une erreur de phase dφc corrigée à destination du composant à verrouillage de phase 16 pour en améliorer l'ajustage de phase. Dans ce mode, l'ajustage de coefficients PEp et PEC par le composant 22, tel qu'expliqué dans la suite de la description, est alors neutralisé pour prendre en compte les erreurs de phase de correction dφc de façon à éviter des instabilités provoquées par une mise en concurrence de deux systèmes d'ajustage. L'ajustage de phase interne par la boucle à verrouillage de phase du composant 16, est satisfaisant en terme de stabilité mais il provoque des tremblements (jitter en anglais) sur la phase absolue de l'horloge 15. L'ajustage de phase avec l'erreur de phase corrigée dφc donnée par le composant de correction 17, présente une valeur absolue moyenne inférieure à celle de dφ, ce qui augmente la stabilité de la boucle de phase.

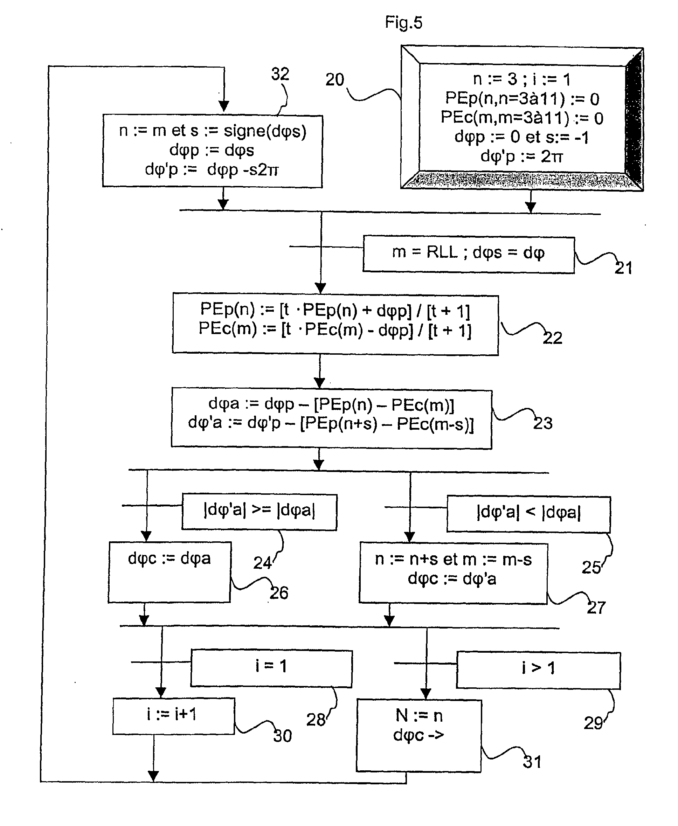

La figure 5 montre une boucle de transitions et d'étapes 21 à 32 qui sont exécutées en temps réel dans le composant de correction 17.

Chaque réception d'une longueur de symbole RLL et d'une erreur de phase dφ par le composant de correction 17 en provenance du composant à verrouillage de phase 16, valide une transition 21.

Dans la transition 21, une première variable m est de valeur égale à la longueur de symbole RLL reçue, dite longueur de deuxième symbole reçue. Une deuxième variable dφs est de valeur égale à l'erreur de phase dφ reçue, dite erreur de phase suivante en fin de deuxième symbole. La transition 21 active une étape 23 d'évaluation d'erreurs aléatoires de phase.

Dans l'étape 23, une première erreur déterministe de phase est calculée pour une longueur de premier symbole qui vaut n. Le premier symbole étant celui qui précède le deuxième symbole, la valeur de n résulte d'une étape 32 activée par une exécution précédente de la boucle de transitions et d'étapes 21 à 32. En régime établi, c'est-à-dire après au moins une exécution de la boucle, la valeur de n est égale à la valeur de m donnée par une validation précédente de la transition 21.

La première erreur déterministe de phrase dite PE(n,m), est représentative d'une interférence inter symboles en absence de bruit. La valeur absolue d'amplitude du signal modulé 8 est une fonction croissante de la longueur du symbole qui lui est associé, à cause de la bande passante du canal de transmission. Une forte amplitude a tendance à systématiquement retarder le changement de signe d'amplitude en fin de symbole et à avancer le changement de signe d'amplitude en début de symbole. Une faible amplitude a tendance à systématiquement avancer le changement de signe d'amplitude en fin de symbole et à retarder le changement de signe en début de symbole.

En nommant PEp(n) l'erreur systématique de phase en fin de premier symbole de longueur n et PEc(m) l'erreur systématique de phase en début de deuxième symbole de longueur m dans une suite de deux symboles de longueurs respectives n et m, une représentativité satisfaisante de l'erreur déterministe de phase PE(n, m) est donnée par la formule :

$$PE(n,m) = PEp(n) - PEc(m)$$

En absence de bruit sur le canal de transmission, l'erreur de phase mesurée dφp est sensiblement égale à l'erreur déterministe de phase PE(n,m). En présence d'un bruit blanc sur le canal de transmission, une erreur aléatoire de phase vient s'ajouter à l'erreur déterministe de phase PE(n,m).

Dans l'étape 23, une première erreur aléatoire de phase dφa est calculée en retranchant l'erreur déterministe de phase PE(n,m) de l'erreur de phase mesurée dφp. L'erreur de phase mesurée dφp étant donnée par le composant à verrouillage de phase 16 en fin de première séquence de longueur n, la valeur de dφp résulte de l'étape 32 activée par une exécution précédente de la boucle de transitions et d'étapes 21 à 32. En régime établi, c'est-à-dire après au moins une exécution de la boucle, la valeur dφp est prise égale en étape 32 à la valeur dφs donnée par une validation précédente de la transition 21.

L'erreur de phase mesurée dφp est donnée par une différence de temps entre un changement de signe du signal 8 et le front d'horloge symbole le plus proche, divisé par $T/2\pi$. La différence de temps dt est telle que:

$$-T/2 < dt < T/2.$$

Si la période est mesurée en radians, T vaut $2\pi$. Une erreur de phase alternative $d\varphi'_p$ est donnée par l'avance avec laquelle l'amplitude du signal modulé 8 change de phase avant une dernière alternance supplémentaire d'horloge symbole si celle-ci avait été prise en compte par le composant à verrouillage de phase 16 pour donner une longueur n+s supérieure de premier symbole. L'erreur de phase alternative se calcule par les formules :

$$d\varphi'p = d\varphi p - 2\pi \text{ si } d\varphi p \text{ est positif,}$$

$$d\varphi'p = d\varphi p + 2\pi \text{ si } d\varphi p \text{ est négatif ou nul.}$$

On considère dans la suite de la description une variable de signe s qui vaut +1 si $d\varphi p$ est positif et qui vaut -1 si $d\varphi p$ est négatif ou nul.

Dans l'étape 23, une deuxième erreur déterministe est calculée pour une longueur de première séquence qui vaut n+s. Le premier symbole étant celui qui précède le deuxième symbole, la longueur du deuxième symbole est prise égale à m-s pour conserver le nombre d'alternances d'horloge symbole sur une succession de deux symboles.

La deuxième erreur déterministe de phase PE(n+s,m-s) est alors donnée par la formule :

$$PE(n+s,m-s) = PEp(n+s) - PEc(m-s)$$

Dans l'étape 23, une deuxième erreur aléatoire de phase $d\varphi'a$ est calculée en retranchant l'erreur déterministe de phase PE (n+s,m-s) de l'erreur alternative de phase $d\varphi'p$. L'erreur alternative $d\varphi'p$, est calculée en régime établi par l'étape 32 d'une exécution précédente de boucle, en retranchant de T, l'erreur de phase mesurée $d\varphi p$.

Une première exécution de la boucle de transitions et d'étapes 21 à 32 n'est précédée par aucune activation de l'étape 32. Les valeurs de n, de $d\varphi p$ et de $d\varphi'p$ sont initialisées dans une étape initiale 20 activée à la mise sous tension du composant de correction 17.

Dans l'étape initiale 20, la valeur de n est prise arbitrairement égale à 3, la valeur de $d\varphi p$ est arbitrairement prise égale à 0 et la valeur de $d\varphi'p$ est arbitrairement prise égale T. La valeur de n est prise par exemple égale à 3 dans un mode de codage où les longueurs de symboles sont comprises entre 3 et 11.

L'étape 23 permet de retenir pour une succession de deux symboles, les longueurs qui minimisent l'erreur aléatoire de phase. On considère que l'erreur de phase aléatoire la plus faible est celle qui a la plus forte probabilité de se produire lorsqu'elle est provoquée par un bruit blanc.

A la suite de l'étape 23, une transition 24 est validée lorsque la valeur absolue de la deuxième erreur aléatoire de phase $d\varphi'a$ calculée est supérieure ou égale à la valeur absolue de la première erreur aléatoire de phase $d\varphi a$, une transition 25 est validée lorsque la valeur absolue de la deuxième erreur aléatoire de phase $d\varphi'a$ est inférieure à la valeur absolue de la première erreur aléatoire de phase $d\varphi a$ calculée en étape 23.

La transition 24 active une étape 26 dans laquelle une erreur de phase corrigée $d\varphi c$ est prise égale à la première erreur aléatoire de phase $d\varphi a$, alors la plus faible.

La transition 25 active une étape 27. L'étape 27 est donc activée lorsque la deuxième erreur aléatoire de phase $d\varphi'a$ est inférieure en valeur absolue à la première erreur aléatoire de phase $d\varphi a$.

Dans l'étape 27, la longueur n du premier symbole est augmentée, respectivement diminuée d'une unité et la longueur du deuxième symbole est diminuée, respectivement augmentée d'une unité de façon à conserver la longueur totale des symboles, si l'erreur de phase mesurée $d\varphi p$ est positive, respectivement négative ou nulle. C'est en effet dans ce cas les longueurs n et m des symboles, estimées qui conduisent à une erreur de phase aléatoire $d\varphi'a$ la plus faible en valeur absolue sur un passage par zéro du signal 8. L'erreur de phase corrigée $d\varphi c$ est prise égale à la deuxième erreur aléatoire de phase $d\varphi'a$, alors la plus faible en valeur absolue.

A la suite de l'étape 26 ou de l'étape 27, une transition 28 est validée lorsqu'un indice de boucle i est égal à 1. L'indice i, mis à 1 dans l'étape 20, indique une première exécution de la boucle lorsqu'il est égal à 1. Une transition 29 est validée lorsque l'indice i est supérieur à 1.

La transition 28 active une étape 30 qui incrémente l'indice i pour marquer que les étapes 21 à 30 ont été exécutées au moins une première fois.

La transition 29 active une étape 31 qui transmet en sortie du composant de correction 17, une longueur de symbole N égale à n non corrigée à la suite de l'étape 26 ou à n corrigée à la suite de l'étape 27. A la première exécution de l'étape 23, l'étape 31 n'est pas exécutée et la valeur de n initialisée en étape 20 n'est pas transmise en sortie du composant de correction 17. Suite aux exécutions suivantes de l'étape 23, l'étape 30 n'est plus exécutée et les valeurs successives de N sont transmises en sortie du composant 17. L'erreur de phase corrigée $d\varphi c$ est transmise au composant à verrouillage de phase 16 pour recalage.

L'étape 32 est activée à la suite de l'étape 30 ou de l'étape 31. L'étape 32 a pour but de préparer une nouvelle exécution de la boucle après une nouvelle validation de la transition 21.

Dans l'étape 32, la longueur n de premier symbole est prise égale à la longueur m de deuxième symbole de façon à considérer comme premier symbole pour une validation suivante de la transition 21, le deuxième symbole considéré pour une validation précédente de la transition 21. L'erreur de phase mesurée $d\varphi p$ entre premier et deuxième symbole est prise égale à l'erreur de phase $d\varphi s$ transmise par le composant à verrouillage de phase 16 dans la validation de transition 21 précédente. L'étape 32 calcule l'erreur de phase alternative $d\varphi'p$ en calculant la phase complémentaire de $d\varphi p$. De façon générale:

$$d\varphi p = d\varphi s$$

$$d\varphi'p = d\varphi s - 2\pi \cdot signe(d\varphi s).$$

Ainsi, sauf à la première validation de la transition 21, l'étape 31 transmet en sortie du composant 17, une longueur N de premier symbole pour chaque validation de la transition 21, en fonction de la longueur n courante, c'est à dire de la longueur m pour une validation précédente de la transition 21. Deux validations successives de la transition 24 donnent une valeur de N égale à la valeur de m transmise pour une validation précédente de la transition 21. Une validation de la transition 25 précédée d'une validation de la transition 24 donne une valeur de N égale à m+s, c'est à dire m+1 ou m-1 selon la valeur de s. Une validation de la transition 24 précédée d'une validation de la transition 25 donne une valeur de N égale à m-s, c'est à dire m-1 ou m+1 selon la valeur de s précédente. Deux validations successives de la transition 25 donnent une valeur de N égale à m pour deux valeurs successives de s de même signe, égale à m-2 pour une valeur de s négative précédée d'une valeur de s positive, égale à m+2 pour une valeur de s positive précédée d'une valeur de s négative.

Les erreurs systématiques de phase notées PEp(j) et PEc(j), j variant par exemple de trois à onze, peuvent être déterminées a priori par des considérations théoriques sur la bande passante du canal de transmission. Ces erreurs systématiques sont alors stockées sous forme d'une table en mémoire permanente du composant de correction 17. Cette table référencée par l'indice j est alors accédée par l'étape 23 en remplaçant j par n, m, n+s ou m-s selon l'erreur systématique de phase nécessaire aux calculs.

Cependant la bande passante du canal de transmission n'est pas toujours facile à évaluer. De plus, celle-ci peut varier en fonction des conditions d'utilisation de lecture du disque optique.

Avantageusement, la boucle décrite en référence à la figure 5 comprend une étape 22 activée par la transition 21, de préférence avant l'étape 23.

L'étape 22 calcule PEp(j) pour j = n, comme étant une moyenne glissante des erreurs de phases mesurées quant la longueur du premier symbole est égale à n.

En effet, nous avons vu précédemment que l'erreur de phase mesurée est composée d'une erreur de phase aléatoire dφa et d'une erreur déterministe :

$$d\varphi p = d\varphi a + PEp(n) - PEc(m)$$

La moyenne d'une somme étant égale à la somme des moyennes, la moyenne des erreurs de phases mesurées est égale à la somme de la moyenne des erreurs aléatoires de phase dφa et de la moyenne des erreurs déterministes de phase. Par définition d'un bruit blanc à l'origine des erreurs aléatoires de phase, la moyenne des erreurs aléatoires de phase dφa est nulle pour un nombre d'échantillons suffisamment grand.

A n fixé, PEp(n) est une constante et sa moyenne est égale à cette constante. Aucune alternance d'horloge symbole n'étant perdue, la moyenne des erreurs déterministes pour toutes les combinaisons possibles de premier symbole de longueur n et de deuxième symbole de longueur m, est nulle. La répartition statistique des longueurs m de deuxième symbole qui suivent le premier symbole, étant équiprobables, la moyenne des erreurs systématiques de phase PEc(m) à n fixé, est nulle pour une quantité suffisamment grande d'échantillons.

Ainsi, pour une quantité suffisamment grande d'échantillons et dans la mesure où peu d'erreurs de décodage sont commises, la moyenne des erreurs de phases mesurées dφp à n fixé, est égale à l'erreur systématique PEp(n).

L'étape 22 calcule aussi PEc(j) pour j=m, comme étant une moyenne de signe inversé des erreurs de phase mesurées quand la longueur du deuxième symbole est égale à m.

En appliquant le raisonnement précédent à l'équation :

$$- d\varphi p = - d\varphi a - PEp(n) + PEc(m)$$

on constate que la moyenne des erreurs de phases mesurées en inversant le signe, est égale à PEc(m) pour m fixé et une quantité d'échantillons suffisamment grande.

Une façon élégante pour réactualiser en permanence les moyennes au fur et à mesure des réceptions de longueurs de symboles et des erreurs de phases, consiste à utiliser des filtres passe bas recevant en entrée l'erreur de phase mesurée dφp ou respectivement -dφp et activés chacun par une réception de longueur n de premier symbole ou respectivement m de deuxième symbole.

Le composant de correction 17 contient dans un registre mémoire une longueur n de premier symbole et une erreur de phase mesurée dφp en fin de premier symbole. D'autre part, le composant de correction 17 contient dans une première table, une valeur précédemment évaluée d'erreur systématique de phase PEp(n) en fin de premier symbole de longueur n. A la mise sous tension du composant 17, cette valeur est initialisée dans l'étape initiale 20, par exemple à une valeur nulle. Cette valeur peut aussi être initialisée à une constante prédéterminée en fonction de considérations théoriques sur la bande passante du canal.

Après validation de la transition 21, l'erreur précédemment évaluée PEp(n) est multipliée par un coefficient t supérieur à 1 puis sommée avec l'erreur de phase mesurée dφp. Le résultat ainsi obtenu est divisé par t+1 pour donner une nouvelle évaluation de l'erreur systématique PEp(n) rangée dans la première table.

Le composant de correction 17 contient dans une deuxième table, une valeur précédemment évaluée d'erreur systématique de phase PEc(m) en début de deuxième symbole de longueur m. A la mise sous tension du composant 17, cette valeur est initialisée dans l'étape 20, par exemple à une valeur nulle. Cette valeur peut aussi être initialisée à une constante prédéterminée en fonction de considérations théoriques sur la bande passante du canal.

Après validation de la transition 21, qui donne la longueur m de deuxième symbole, l'erreur précédemment évaluée PEc(m) est multipliée par le coefficient t puis sommée avec l'erreur de phase mesurée dφp dont le signe est inversé. La division du résultat ainsi obtenu par t+1 donne une nouvelle évaluation de l'erreur systématique PEc(m) rangée dans la deuxième table.

Les valeurs en sortie des filtres qui viennent d'être décrits convergent chacune vers une moyenne PEp(n) et PEc(m), évaluée en temps réel pour un nombre suffisant d'exécutions de la boucle.

La technologie actuelle permet de réaliser des unités de traitement arithmétique et logique rapides. On peut concevoir d'intégrer une telle unité dans le composant 17 avec un microprogramme chargé en mémoire permanente pour exécuter la boucle décrite en référence à la figure 5.

Pour obtenir de meilleures performances en rapidité de traitement, on peut aussi concevoir d'intégrer les différentes transitions et étapes de la boucle, sous forme de circuits combinatoires dans le composant 17.

En référence à la figure 5, on vient de décrire un détecteur de longueur N de premier symbole qui met en oeuvre un algorithme recevant en entrée une succession de longueurs de deux symboles et une erreur de phase mesurée entre les deux symboles. Pour une longueur de premier symbole égale à une longueur m de deuxième symbole reçue, la longueur N est égale à m-2, m-1, m, m+1 ou m+2 en fonction de l'erreur de phase reçue avec la longueur m et d'une erreur de phase reçue précédemment. Les longueurs de symboles sont donc estimées en temps réel par séquence de deux symboles qui se chevauchent, le deuxième symbole d'une séquence précédente constituant le premier symbole d'une séquence suivante.

Considérons un événement d'indice k pour lequel le composant de correction 17 reçoit une longueur $l_k$ de premier symbole, une longueur $l_{k+1}$ de deuxième symbole et une erreur de phase $d\varphi_k$ entre le premier et le deuxième symbole. On note $s_k$ le signe de $d\varphi_k$. Dans le procédé expliqué en référence à la figure 5, pour apprécier l'erreur de phase aléatoire la plus probable, la première erreur déterministe de phase PE(n,m) était générée sans correction de n et m, la deuxième erreur déterministe de phase PE(n+s,m-s) était générée pour une correction de n et m. S'il n'y avait pas eu correction pour l'événement précédent d'indice k-1, n était alors égal à $l_k$, s'il y avait eu correction, n était égal à $l_k$ - $s_k$. Il était donc tenu compte de l'événement précédent. Par contre il n'était pas tenu compte de l'événement suivant car m était pris égal à $l_{k+1}$. Or s'il y a correction pour l'événement suivant, la valeur de m à prendre en compte pour générer les erreurs déterministes de phase, devrait être égale à $l_{k+1}$+ $s_k$.

On remarque qu'il existe huit états possibles d'erreur aléatoire de phase pour une erreur de phase $d\varphi_k$ égale à dφp dans l'événement d'indice k.

En notant xxx chacun de ces états où x est une variable binaire égale à 0 ou à 1:

- un état x0x correspond à une absence de correction pour l'événement d'indice k;
- un état x1x correspond à une correction pour l'événement d'indice k;
- un état 0xx correspond à une absence de correction pour l'événement d'indice k-1;
- un état 1xx correspond à une correction pour l'événement d'indice k-1;
- un état xx0 correspond à une absence de correction pour l'événement d'indice k+1;
- un état xx1 correspond à une correction pour l'événement d'indice k+1.

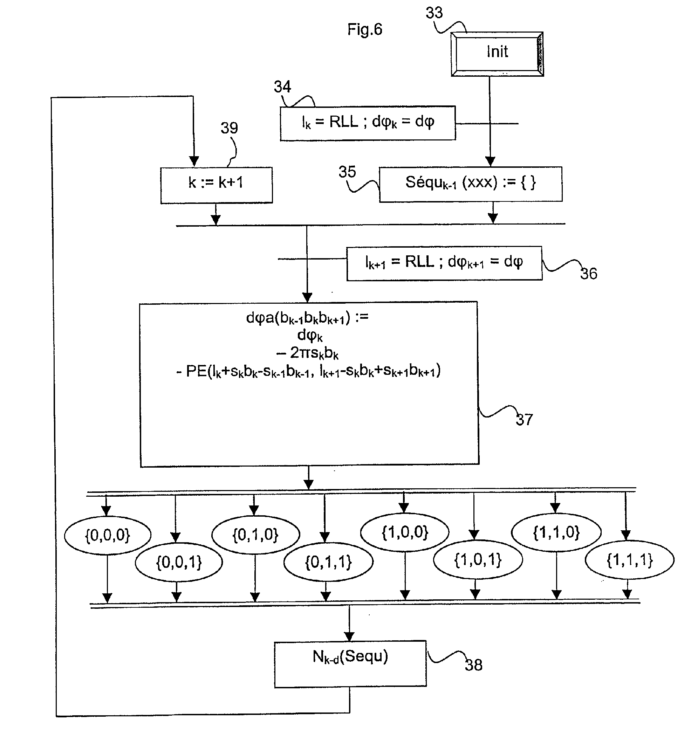

En référence à la figure 6, on explique à présent une version améliorée du procédé conforme à l'invention.

Dans une étape d'initialisation 33, un indice k d'état courant, est initialisé à 1, huit variables dites de chemin $Chem_{k-1}(xxx)$, d'indice k-1 égal à zéro, sont initialisées à zéro, chacune pour un état {x,x,x} parmi huit états {0,0,0}, {0,0,1}, {0,1,0}, {0,1,1}, {1,0,0}, {1,0,1}, {1,1,0}, {1,1,1}. Une variable de chemin d'indice k supérieur à 0, représente une distance sur un chemin pour arriver à l'état {x,x,x} correspondant lorsqu'un $k^{ième}$ événement se produit.

Suite à l'étape 33, une transition 34 est validée lorsque le composant de correction 17 reçoit du composant à verrouillage de phase 16, une longueur de symbole RLL qui donne une longueur $l_k$ d'événement courant et une erreur de phase dφ qui donne une erreur de phase $d\varphi_k$ d'événement courant.

La transition 34 active une étape 35. Dans l'étape 35, sont initialisées à l'ensemble vide, huit séries $Séqu_{k-1}$ (xxx), d'indice k-1 égal à zéro, chacune pour un état {x,x,x} parmi huit états {0,0,0}, {0,0,1},{0,1,0}, {0,1,1}, {1,0,0}, {1,0,1}, {1,1,0}, (1,1,1). Une série d'indice k supérieur à 0, est une suite de longueurs de symboles dont la dernière longueur est celle estimée pour l'état {x,x,x} correspondant lorsqu'un $k^{\text{ième}}$ événement se produit.

A la suite de l'étape 35, une transition 36 est validée lorsque le composant de correction 17 reçoit du composant à verrouillage de phase 16, une longueur de symbole RLL qui donne une longueur $l_{k+1}$ d'événement suivant l'événement courant et une erreur de phase dφ qui donne une erreur de phase $d\varphi_k$ d'événement suivant l'évènement courant.

La transition 36 active une étape 37. Dans l'étape 37 sont calculées huit erreurs aléatoires possibles chacune pour l'un des huit états possibles précédemment cités.

Considérant l'état {0,0,0}, il n'y a pas de correction de la longueur $l_k$ reçue, ni pour l'événement courant d'indice k, ni pour un événement précédent d'indice k-1. Il n'y a pas de correction de la longueur $l_{k+1}$ reçue, ni pour l'événement courant d'indice k, ni pour un événement suivant d'indice k+1. L'erreur aléatoire de phase dφa(000) serait nulle si l'erreur de phase $d\varphi_k$ reçue était égale à une erreur systématique de phase $PE(l_k, l_{k+1})$. L'erreur de phase $d\varphi_k$ reçue pouvant comprendre une part d'erreur aléatoire de phase dφa(000) non nulle:

$$d\varphi a(000) = d\varphi_k - PE(l_k, l_{k+1}).$$

L'erreur systématique de phase $PE(l_k, l_{k+1})$ est disponible en mémoire ou calculée dans le composant de correction 17 au moyen de la formule:

$$PE(l_k, l_{k+1}) = PEp(l_k) - PEc(l_{k+1})$$

L'erreur systématique de phase $PE(l_k, l_{k+1})$ est ensuite retranchée de l'erreur de phase $d\varphi_k$ reçue pour obtenir l'erreur aléatoire de phase dφa(000).

Considérant l'état {0,0,1}, il n'y a pas de correction de la longueur $l_k$ reçue, ni pour l'événement courant d'indice k, ni pour l'événement précédent d'indice k-1. Il n'y a pas de correction de la longueur $l_{k+1}$ reçue pour l'événement courant d'indice k, il y a une correction pour l'événement suivant d'indice k+1 qui donne $l_{k+1} + s_{k+1}$. L'erreur aléatoire de phase dφa(001) serait nulle si l'erreur de phase $d\varphi_k$ reçue était égale à une erreur systématique de phase $PE(l_k, l_{k+1} + S_{k+1})$. L'erreur de phase $d\varphi_k$ reçue pouvant comprendre une part d'erreur aléatoire de phase dφa(001) non nulle:

$$d\varphi a(001) = d\varphi_k - PE(l_k, l_{k+1} + s_{k+1}).$$

L'erreur systématique de phase $PE(l_k, l_{k+1} + s_{k+1})$ est disponible en mémoire ou calculée dans le composant de correction 17 au moyen de la formule:

$$PE(l_k, l_k +_1 +1) = PEp(l_k) - PEc(l_{k+1} + s_{k+1})$$

L'erreur systématique de phase $PE(l_k, l_{k+1+1})$ est ensuite retranchée de l'erreur de phase $d\varphi_k$ reçue pour obtenir l'erreur aléatoire de phase dφa(001).

Considérant l'état {0,1,0}, il y a une correction de la longueur $l_k$ reçue pour l'événement courant d'indice k qui donne $l_k + s_k$, sans correction pour un événement précédent d'indice k-1. Il y a une correction de la longueur $l_{k+1}$ reçue qui donne $l_{k+1} - s_k$ pour l'événement courant d'indice k, sans correction pour l'événement suivant d'indice k+1. L'erreur aléatoire de phase dφa(010) serait nulle si l'erreur de phase $d\varphi_k$ reçue était égale à T moins une erreur systématique de phase $PE(l_k+1, l_{k+1}-1)$. L'erreur de phase $d\varphi_k$ reçue pouvant comprendre une part d'erreur aléatoire de phase dφa (010) non nulle:

$$d\varphi a(010) = d\varphi_k - 2\pi\, s_k - PE(l_k + s_k, l_{k+1-}\, s_k).$$

L'erreur systématique de phase $PE(l_k + s_k, l_{k+1} - s_k)$ est disponible en mémoire ou calculée dans le composant de correction 17 au moyen de la formule:

$$PE(l_k + s_k, l_{k+1} - s_k) = PEp(l_k + s_k) - PEc(l_{k+1} - s_k)$$

La différence à T de l'erreur systématique de phase $PE(l_k + s_k, l_{k+1} - s_k)$, est ensuite retranchée de l'erreur de phase $d\varphi_k$ reçue pour obtenir l'erreur aléatoire de phase $d\varphi a(010)$.

Considérant l'état {0,1,1}, il y a une correction de la longueur $l_k$ reçue pour l'événement courant d'indice k qui donne $l_k + s_k$, sans correction pour un événement précédent d'indice k-1. Il y a une correction de la longueur $l_{k+1}$ reçue qui donne $l_{k+1} - s_{k+1}$ pour l'événement courant d'indice k, et une correction pour l'événement suivant d'indice k+1 qui donne $l_{k+1} - s_k + s_{k+1}$. L'erreur aléatoire de phase $d\varphi a(011)$ serait nulle si l'erreur de phase $d\varphi_k$ reçue était égale à T moins une erreur systématique de phase $PE(l_k + s_k, l_{k+1} - s_k + s_{k+1})$. L'erreur de phase $d\varphi_k$ reçue pouvant comprendre une part d'erreur aléatoire de phase $d\varphi a(011)$ non nulle:

$$d\varphi a(011) = d\varphi_k - 2\pi s_k - PE(l_k + s_k, l_{k+1} - s_k + s_{k+1}).$$

L'erreur systématique de phase $PE(l_k + s_k, l_{k+1} - s_k + s_{k+1})$ est disponible en mémoire ou calculée dans le composant de correction 17 au moyen de la formule:

$$PE(l_k + s_k, l_{k+1}) = PEp(l_k + s_k) - PEc(l_{k+1} - s_k + s_{k+1})$$

La différence à T de l'erreur systématique de phase $PE(l_k + s_k, l_{k+1} - s_k + s_{k+1})$, est ensuite retranchée de l'erreur de phase $d\varphi_k$ reçue pour obtenir l'erreur aléatoire de phase $d\varphi a(011)$.

De façon générale, considérant l'état $\{b_{k-1}, b_k, b_{k+1}\}$ avec $b_{k-1} = 0$ ou 1, $b_k = 0$ ou 1, $b_{k+1} = 0$ ou 1, l'erreur de phase aléatoire $d\varphi a$ est donnée pour cet état par la formule:

$$d\varphi a(b_{k-1}, b_k, b_{k+1}) =$$

$$d\varphi_k - 2\pi s_k b_k - PE(l_k + s_k b_k - s_{k-1} b_{k-1}, l_{k+1} - s_k b_k + s_{k+1} b_{k+1}).$$

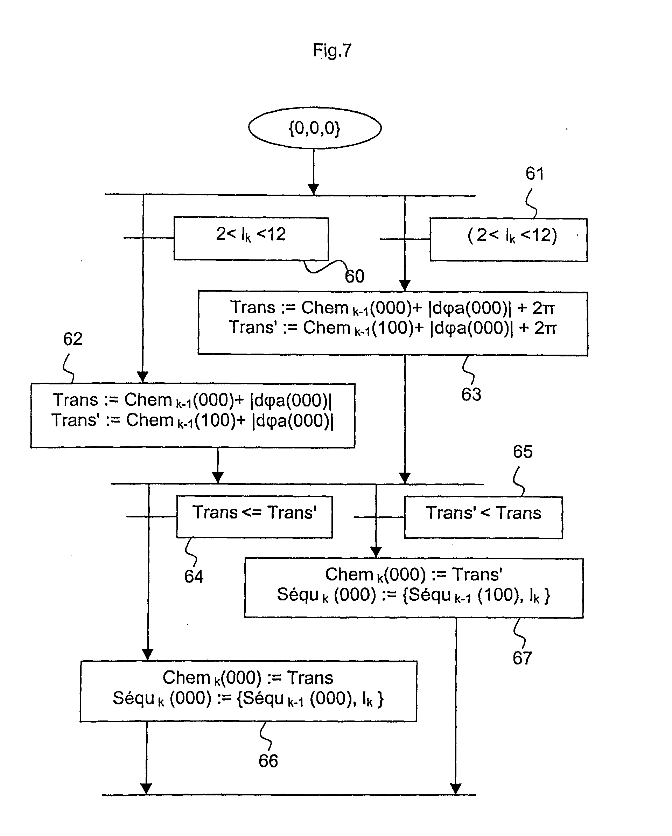

A la suite de l'étape 37, sont exécutées successivement ou en parallèle huit successions d'étapes, chacune respectivement pour l'état {0,0,0}, {0,0,1}, {0,1,0}, {0,1,1}, {1,0,0}, {1,0,1}, {1,1,0}, {1,1,1}, décrites en référence aux figures 7 à 14.

En référence à la figure 7 pour l'état {0,0,0} lié à l'événement d'indice k, deux états liés à l'événement précédent d'indice k-1, peuvent conduire à l'état {0,0,0}, à savoir les états {0,0,0} et {1,0,0}.

Dans une étape 62, le composant de correction 17 calcule deux distances Trans et Trans' de chemins possibles pour aboutir à l'état {0,0,0}.

La distance Trans est prise égale à la somme de la valeur absolue de l'erreur de phase aléatoire $d\varphi a(000)$ pour l'événement d'indice k et de la distance du chemin $Chem_{k-1}(000)$ pour aboutir à l'état {0,0,0} de l'événement d'indice k-1 qui peut précéder l'événement courant d'indice k.

La distance Trans' est prise égale à la somme de la valeur absolue de l'erreur de phase aléatoire $d\varphi a(000)$ pour l'événement d'indice k et de la distance du chemin $Chem_{k-1}(100)$ pour aboutir à l'état {1,0,0} de l'événement d'indice k-1 qui peut précéder l'événement courant d'indice k.

A la suite de l'étape 62, une transition 64 est validée lorsque la distance Trans est inférieure ou égale à la distance Trans' et une transition 65 est validée lorsque la distance Trans' est inférieure à la distance Trans.

La transition 64 active une étape 66 dans laquelle le composant de correction 17 calcule la distance du chemin $Chem_k(000)$ pour aboutir à l'état {0,0,0} de l'événement courant d'indice k et la séquence $Séqu_k(000)$ des longueurs de symboles estimées pour l'état {0,0,0} de l'événement courant d'indice k. En prenant la distance de chemin $Chem_k$(000) égale à la distance Trans, celle-ci est la plus courte pour aboutir à l'état {0,0,0} de l'événement courant d'indice k car, par récursivité d'un calcul précédent pour l'état {0,0,0} de l'événement d'indice k-1, aucune distance de chemin n'était inférieure à la distance de chemin $Chem_{k-1}(000)$ pour aboutir à l'état {0,0,0} de l'événement précédent. La séquence $Séqu_k(000)$ des longueurs de symboles estimées pour l'état {0,0,0} de l'événement courant d'indice k, est obtenue en concaténant à la séquence $Séqu_{k-1}(000)$ des longueurs de symboles estimées pour l'état {0,0,0} de l'événement précédent d'indice k-1, comme élément supplémentaire la longueur $l_k$ non modifiée par l'état {0,0,0} de l'événement courant d'indice k.

La transition 65 active une étape 67 dans laquelle le composant de correction 17 calcule la distance du chemin $Chem_k(000)$ pour aboutir à l'état {0,0,0} de l'événement courant d'indice k et la séquence $Séqu_k(000)$ des longueurs

de symboles estimées pour l'état {0,0,0} de l'événement courant d'indice k. En prenant la distance de chemin $Chem_k$(000) égale à la distance Trans', celle-ci est la plus courte pour aboutir à l'état {0,0,0} de l'événement courant d'indice k car, par récursivité d'un calcul précédent pour l'état {1,0,0} de l'événement d'indice k-1, aucune distance de chemin n'était inférieure à la distance de chemin $Chem_{k-1}$(100) pour aboutir à l'état {1,0,0} de l'événement précédent. La séquence $Séqu_k$(000) des longueurs de symboles estimées pour l'état {0,0,0} de l'événement courant d'indice k, est obtenue en concaténant à la séquence $Séqu_{k-1}$(100) des longueurs de symboles estimées pour l'état {1,0,0} de l'événement précédent d'indice k-1, comme élément supplémentaire la longueur $l_k$ non modifiée par l'état {0,0,0} de l'événement courant d'indice k.

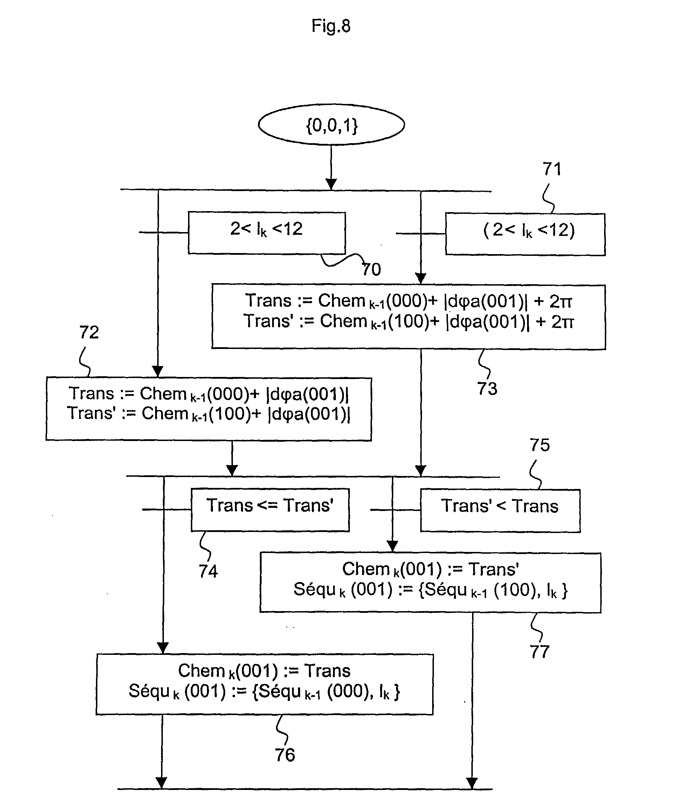

En référence à la figure 8 pour l'état {0,0,1} lié à l'événement d'indice k, deux états liés à l'événement précédent d'indice k-1, peuvent conduire à l'état {0,0,0}, à savoir les états {0,0,0} et {1,0,0}.

Dans une étape 72, le composant de correction 17 calcule deux distances Trans et Trans' de chemins possibles pour aboutir à l'état {0,0,1}.

La distance Trans est prise égale à la somme de la valeur absolue de l'erreur de phase aléatoire dφa(001) pour l'événement d'indice k et de la distance du chemin $Chem_{k-1}$(000) pour aboutir à l'état {0,0,0} de l'événement d'indice k-1 qui peut précéder l'événement courant d'indice k.

La distance Trans' est prise égale à la somme de la valeur absolue de l'erreur de phase aléatoire dφa(001) pour l'événement d'indice k et de la distance du chemin $Chem_{k-1}$(100) pour aboutir à l'état {1,0,0} de l'événement d'indice k-1 qui peut précéder l'événement courant d'indice k.

A la suite de l'étape 72, une transition 74 est validée lorsque la distance Trans est inférieure ou égale à la distance Trans' et une transition 75 est validée lorsque la distance Trans' est inférieure à la distance Trans.

La transition 74 active une étape 76 dans laquelle le composant de correction 17 calcule la distance du chemin $Chem_k$(001) pour aboutir à l'état {0,0,1} de l'événement courant d'indice k et la séquence $Séqu_k$(001) des longueurs de symboles estimées pour l'état {0,0,1} de l'événement courant d'indice k. En prenant la distance de chemin $Chem_k$(001) égale à la distance Trans, celle-ci est la plus courte pour aboutir à l'état {0,0,1} de l'événement courant d'indice k car, par récursivité d'un calcul précédent pour l'état {0,0,0} de l'événement d'indice k-1, aucune distance de chemin n'était inférieure à la distance de chemin $Chem_{k-1}$(000) pour aboutir à l'état {0,0,0} de l'événement précédent. La séquence $Séqu_k$(001) des longueurs de symboles estimées pour l'état {0,0,1} de l'événement courant d'indice k, est obtenue en concaténant à la séquence $Séqu_{k-1}$(000) des longueurs de symboles estimées pour l'état {0,0,0} de l'événement précédent d'indice k-1, comme élément supplémentaire la longueur $l_k$ non modifiée par l'état {0,0,1} de l'événement courant d'indice k.

La transition 75 active une étape 77 dans laquelle le composant de correction 17 calcule la distance du chemin $Chem_k$(001) pour aboutir à l'état {0,0,1} de l'événement courant d'indice k et la séquence $Séqu_k$(001) des longueurs de symboles estimées pour l'état {0,0,1} de l'événement courant d'indice k. En prenant la distance de chemin $Chem_k$(001) égale à la distance Trans', celle-ci est la plus courte pour aboutir à l'état {0,0,1} de l'événement courant d'indice k car, par récursivité d'un calcul précédent pour l'état {1,0,0} de l'événement d'indice k-1, aucune distance de chemin n'était inférieure à la distance de chemin $Chem_{k-1}$(100) pour aboutir à l'état {1,0,0} de l'événement précédent. La séquence $Séqu_k$(001) des longueurs de symboles estimées pour l'état {0,0,1} de l'événement courant d'indice k, est obtenue en concaténant à la séquence $Séqu_{k-1}$(100) des longueurs de symboles estimées pour l'état {1,0,0} de l'événement précédent d'indice k-1, comme élément supplémentaire la longueur $l_k$ non modifiée par l'état {0,0,1} de l'événement courant d'indice k.

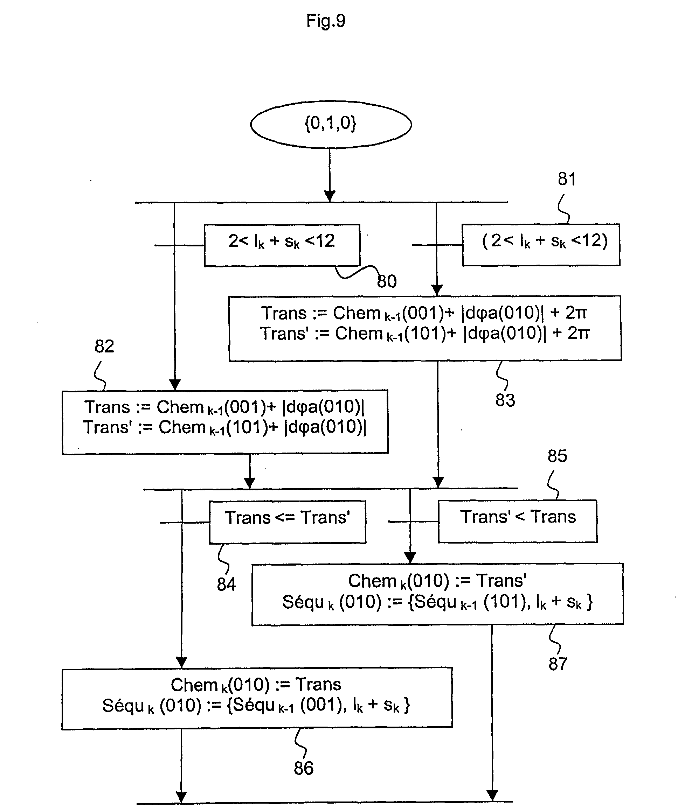

En référence à la figure 9 pour l'état {0,1,0} lié à l'événement d'indice k, deux états liés à l'événement précédent d'indice k-1, peuvent conduire à l'état {0,1,0}, à savoir les états {0,0,1} et {1,0,1}.

Dans une étape 82, le composant de correction 17 calcule deux distances Trans et Trans' de chemins possibles pour aboutir à l'état {0,1,0}.

La distance Trans est prise égale à la somme de la valeur absolue de l'erreur de phase aléatoire dφa(010) pour l'événement d'indice k et de la distance du chemin $Chem_{k-1}$(001) pour aboutir à l'état {0,0,1} de l'événement d'indice k-1 qui peut précéder l'événement courant d'indice k.

La distance Trans' est prise égale à la somme de la valeur absolue de l'erreur de phase aléatoire dφa(010) pour l'événement d'indice k et de la distance du chemin $Chem_{k-1}$(101) pour aboutir à l'état {1,0,1} de l'événement d'indice k-1 qui peut précéder l'événement courant d'indice k.

A la suite de l'étape 82, une transition 84 est validée lorsque la distance Trans est inférieure ou égale à la distance Trans' et une transition 85 est validée lorsque la distance Trans' est inférieure à la distance Trans.

La transition 84 active une étape 86 dans laquelle le composant de correction 17 calcule la distance du chemin $Chem_k$(010) pour aboutir à l'état {0,1,0} de l'événement courant d'indice k et la séquence $Séqu_k$(010) des longueurs de symboles estimées pour l'état {0,1,0} de l'événement courant d'indice k. En prenant la distance de chemin $Chem_k$(010) égale à la distance Trans, celle-ci est la plus courte pour aboutir à l'état {0,1,0} de l'événement courant d'indice k car, par récursivité d'un calcul précédent pour l'état {0,0,1} de l'événement d'indice k-1, aucune distance de chemin n'était inférieure à la distance de chemin $Chem_{k-1}$(001) pour aboutir à l'état {0,0,1} de l'événement précédent. La

séquence $Séqu_k(010)$ des longueurs de symboles estimées pour l'état {0,1,0} de l'événement courant d'indice k, est obtenue en concaténant à la séquence $Séqu_{k-1}(001)$ des longueurs de symboles estimées pour l'état {0,0,1} de l'événement précédent d'indice k-1, comme élément supplémentaire la longueur $l_k+s_k$ modifiée par l'état {0,1,0} de l'événement courant d'indice k.

La transition 85 active une étape 87 dans laquelle le composant de correction 17 calcule la distance du chemin $Chem_k(010)$ pour aboutir à l'état {0,1,0} de l'événement courant d'indice k et la séquence $Séqu_k(010)$ des longueurs de symboles estimées pour l'état {0,1,0} de l'événement courant d'indice k. En prenant la distance de chemin $Chem_k$ (010) égale à la distance Trans', celle-ci est la plus courte pour aboutir à l'état {0,1,0} de l'événement courant d'indice k car, par récursivité d'un calcul précédent pour l'état {1,0,1} de l'événement d'indice k-1, aucune distance de chemin n'était inférieure à la distance de chemin $Chem_{k-1}(101)$ pour aboutir à l'état {1,0,1} de l'événement précédent. La séquence $Séqu_k(010)$ des longueurs de symboles estimées pour l'état {0,1,0} de l'événement courant d'indice k, est obtenue en concaténant à la séquence $Séqu_{k-1}(101)$ des longueurs de symboles estimées pour l'état {1,0,1} de l'événement précédent d'indice k-1, comme élément supplémentaire la longueur $l_k+s_k$ modifiée par l'état {0,1,0} de l'événement courant d'indice k.

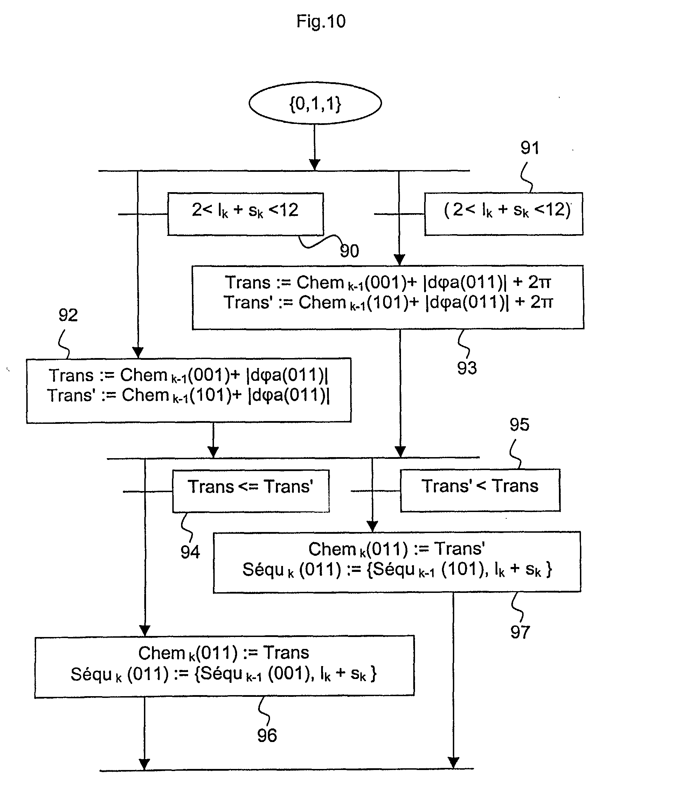

En référence à la figure 10 pour l'état {0,1,1} lié à l'événement d'indice k, deux états liés à l'événement précédent d'indice k-1, peuvent conduire à l'état {0,1,1}, à savoir les états {0,0,1} et {1,0,1}.

Dans une étape 92, le composant de correction 17 calcule deux distances Trans et Trans' de chemins possibles pour aboutir à l'état {0,1,1}.

La distance Trans est prise égale à la somme de la valeur absolue de l'erreur de phase aléatoire dφa(011) pour l'événement d'indice k et de la distance du chemin $Chem_{k-1}(001)$ pour aboutir à l'état {0,0,1} de l'événement d'indice k-1 qui peut précéder l'événement courant d'indice k.

La distance Trans' est prise égale à la somme de la valeur absolue de l'erreur de phase aléatoire dφa(011) pour l'événement d'indice k et de la distance du chemin $Chem_{k-1}(101)$ pour aboutir à l'état {1,0,1} de l'événement d'indice k-1 qui peut précéder l'événement courant d'indice k.

A la suite de l'étape 92, une transition 94 est validée lorsque la distance Trans est inférieure ou égale à la distance Trans' et une transition 95 est validée lorsque la distance Trans' est inférieure à la distance Trans.

La transition 94 active une étape 96 dans laquelle le composant de correction 17 calcule la distance du chemin $Chem_k(011)$ pour aboutir à l'état {0,1,1} de l'événement courant d'indice k et la séquence $Séqu_k(011)$ des longueurs de symboles estimées pour l'état {0,1,1} de l'événement courant d'indice k. En prenant la distance de chemin $Chem_k$ (011) égale à la distance Trans, celle-ci est la plus courte pour aboutir à l'état {0,1,1} de l'événement courant d'indice k car, par récursivité d'un calcul précédent pour l'état {0,0,1} de l'événement d'indice k-1, aucune distance de chemin n'était inférieure à la distance de chemin $Chem_{k-1}(001)$ pour aboutir à l'état {0,0,1} de l'événement précédent. La séquence $Séqu_k(011)$ des longueurs de symboles estimées pour l'état {0,1,1} de l'événement courant d'indice k, est obtenue en concaténant à la séquence $Séqu_{k-1}(001)$ des longueurs de symboles estimées pour l'état {0,0,1} de l'événement précédent d'indice k-1, comme élément supplémentaire la longueur $l_k+s_k$ modifiée par l'état {0,1,1} de l'événement courant d'indice k.

La transition 95 active une étape 97 dans laquelle le composant de correction 17 calcule la distance du chemin $Chem_k(011)$ pour aboutir à l'état {0,1,1} de l'événement courant d'indice k et la séquence $Séqu_k(011)$ des longueurs de symboles estimées pour l'état {0,1,1} de l'événement courant d'indice k. En prenant la distance de chemin $Chem_k$ (011) égale à la distance Trans', celle-ci est la plus courte pour aboutir à l'état {0,1,1} de l'événement courant d'indice k car, par récursivité d'un calcul précédent pour l'état {1,0,1} de l'événement d'indice k-1, aucune distance de chemin n'était inférieure à la distance de chemin $Chem_{k-1}(101)$ pour aboutir à l'état {1,0,1} de l'événement précédent. La séquence $Séqu_k(011)$ des longueurs de symboles estimées pour l'état {0,1,1} de l'événement courant d'indice k, est obtenue en concaténant à la séquence $Séqu_{k-1}(101)$ des longueurs de symboles estimées pour l'état {1,0,1} de l'événement précédent d'indice k-1, comme élément supplémentaire la longueur $l_k+s_k$ modifiée par l'état {0,1,1} de l'événement courant d'indice k.

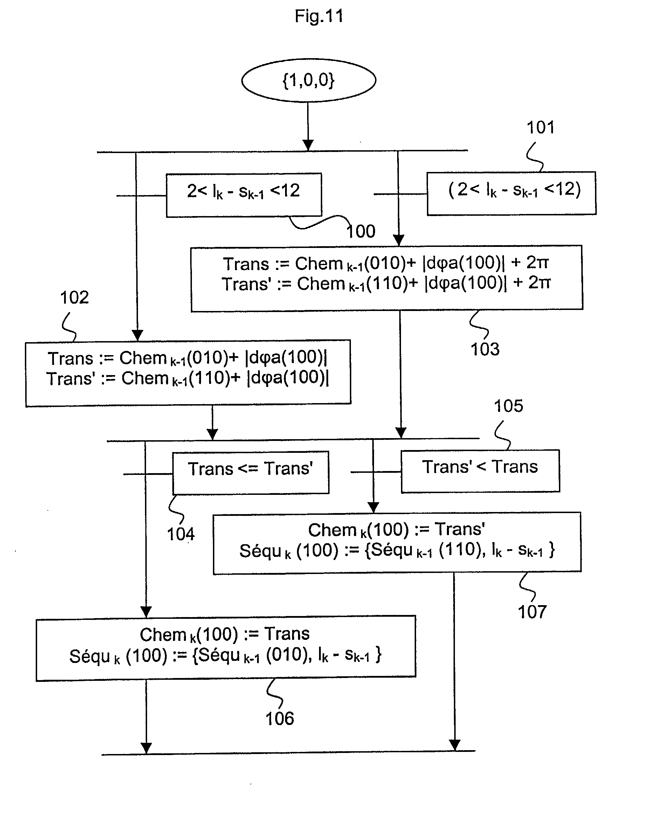

En référence à la figure 11 pour l'état {1,0,0} lié à l'événement d'indice k, deux états liés à l'événement précédent d'indice k-1, peuvent conduire à l'état {1,0,0}, à savoir les états {0,1,0} et {1,1,0}.

Dans une étape 102, le composant de correction 17 calcule deux distances Trans et Trans' de chemins possibles pour aboutir à l'état {1,0,0}.

La distance Trans est prise égale à la somme de la valeur absolue de l'erreur de phase aléatoire dφa(100) pour l'événement d'indice k et de la distance du chemin $Chem_{k-1}(010)$ pour aboutir à l'état {0,1,0} de l'événement d'indice k-1 qui peut précéder l'événement courant d'indice k.

La distance Trans' est prise égale à la somme de la valeur absolue de l'erreur de phase aléatoire dφa(100) pour l'événement d'indice k et de la distance du chemin $Chem_{k-1}(110)$ pour aboutir à l'état {1,1,0} de l'événement d'indice k-1 qui peut précéder l'événement courant d'indice k.

A la suite de l'étape 102, une transition 104 est validée lorsque la distance Trans est inférieure ou égale à la distance Trans' et une transition 105 est validée lorsque la distance Trans' est inférieure à la distance Trans.

La transition 104 active une étape 106 dans laquelle le composant de correction 17 calcule la distance du chemin $Chem_k(100)$ pour aboutir à l'état {1,0,0} de l'événement courant d'indice k et la séquence $Séqu_k(100)$ des longueurs de symboles estimées pour l'état {1,0,0} de l'événement courant d'indice k. En prenant la distance de chemin $Chem_k(100)$ égale à la distance Trans, celle-ci est la plus courte pour aboutir à l'état {1,0,0} de l'événement courant d'indice k car, par récursivité d'un calcul précédent pour l'état {0,1,0} de l'événement d'indice k-1, aucune distance de chemin n'était inférieure à la distance de chemin $Chem_{k-1}(010)$ pour aboutir à l'état {0,1,0} de l'événement précédent. La séquence $Séqu_k(100)$ des longueurs de symboles estimées pour l'état {1,0,0} de l'événement courant d'indice k, est obtenue en concaténant à la séquence $Séqu_{k-1}(010)$ des longueurs de symboles estimées pour l'état {0,1,0} de l'événement précédent d'indice k-1, comme élément supplémentaire la longueur $l_k$-$s_{k-1}$ modifiée par l'état {1,0,0} de l'événement courant d'indice k.

La transition 105 active une étape 107 dans laquelle le composant de correction 17 calcule la distance du chemin $Chem_k(100)$ pour aboutir à l'état {1,0,0} de l'événement courant d'indice k et la séquence $Séqu_k(100)$ des longueurs de symboles estimées pour l'état {1,0,0} de l'événement courant d'indice k. En prenant la distance de chemin $Chem_k(100)$ égale à la distance Trans', celle-ci est la plus courte pour aboutir à l'état {1,0,0} de l'événement courant d'indice k car, par récursivité d'un calcul précédent pour l'état {1,1,0} de l'événement d'indice k-1, aucune distance de chemin n'était inférieure à la distance de chemin $Chem_{k-1}(110)$ pour aboutir à l'état {1,1,0} de l'événement précédent. La séquence $Séqu_k(100)$ des longueurs de symboles estimées pour l'état {1,0,0} de l'événement courant d'indice k, est obtenue en concaténant à la séquence $Séqu_{k-1}(110)$ des longueurs de symboles estimées pour l'état {1,1,0} de l'événement précédent d'indice k-1, comme élément supplémentaire la longueur $l_k$-$s_{k-1}$ modifiée par l'état {1,0,0} de l'événement courant d'indice k.

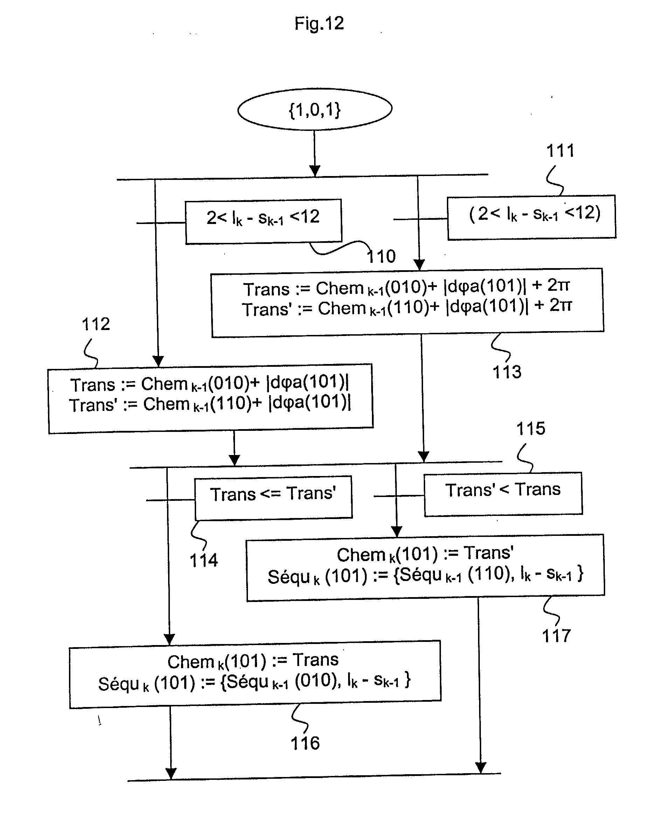

En référence à la figure 12 pour l'état {1,0,1} lié à l'événement d'indice k, deux états liés à l'événement précédent d'indice k-1, peuvent conduire à l'état {1,0,0}, à savoir les états {0,1,0} et {1,1,0}.

Dans une étape 112, le composant de correction 17 calcule deux distances Trans et Trans' de chemins possibles pour aboutir à l'état {1,0,1}.

La distance Trans est prise égale à la somme de la valeur absolue de l'erreur de phase aléatoire $d\varphi a(101)$ pour l'événement d'indice k et de la distance du chemin $Chem_{k-1}(010)$ pour aboutir à l'état {0,1,0} de l'événement d'indice k-1 qui peut précéder l'événement courant d'indice k.

La distance Trans' est prise égale à' la somme de la valeur absolue de l'erreur de phase aléatoire $d\varphi a(101)$ pour l'événement d'indice k et de la distance du chemin $Chem_{k-1}(110)$ pour aboutir à l'état {1,1,0} de l'événement d'indice k-1 qui peut précéder l'événement courant d'indice k.

A la suite de l'étape 112, une transition 114 est validée lorsque la distance Trans est inférieure ou égale à la distance Trans' et une transition 115 est validée lorsque la distance Trans' est inférieure à la distance Trans.

La transition 114 active une étape 116 dans laquelle le composant de correction 17 calcule la distance du chemin $Chem_k(101)$ pour aboutir à l'état {1,0,1} de l'événement courant d'indice k et la séquence $Séqu_k(101)$ des longueurs de symboles estimées pour l'état {1,0,1} de l'événement courant d'indice k. En prenant la distance de chemin $Chem_k(101)$ égale à la distance Trans, celle-ci est la plus courte pour aboutir à l'état {1,0,1} de l'événement courant d'indice k car, par récursivité d'un calcul précédent pour l'état {0,1,0} de l'événement d'indice k-1, aucune distance de chemin n'était inférieure à la distance de chemin $Chem_{k-1}(010)$ pour aboutir à l'état {0,1,0} de l'événement précédent. La séquence $Séqu_k(101)$ des longueurs de symboles estimées pour l'état {1,0,1} de l'événement courant d'indice k, est obtenue en concaténant à la séquence $Séqu_{k-1}(010)$ des longueurs de symboles estimées pour l'état {0,1,0} de l'événement précédent d'indice k-1, comme élément supplémentaire la longueur $l_k$-$s_{k-1}$ modifiée par l'état {1,0,1} de l'événement courant d'indice k.

La transition 115 active une étape 117 dans laquelle le composant de correction 17 calcule la distance du chemin $Chem_k(101)$ pour aboutir à l'état {1,0,1} de l'événement courant d'indice k et la séquence $Séqu_k(101)$ des longueurs de symboles estimées pour l'état {1,0,1} de l'événement courant d'indice k. En prenant la distance de chemin $Chem_k(101)$ égale à la distance Trans', celle-ci est la plus courte pour aboutir à l'état {1,0,1} de l'événement courant d'indice k car, par récursivité d'un calcul précédent pour l'état {1,1,0} de l'événement d'indice k-1, aucune distance de chemin n'était inférieure à la distance de chemin $Chem_{k-1}(110)$ pour aboutir à l'état {1,1,0} de l'événement précédent. La séquence $Séqu_k(101)$ des longueurs de symboles estimées pour l'état {1,0,1} de l'événement courant d'indice k, est obtenue en concaténant à la séquence $Séqu_{k-1}(110)$ des longueurs de symboles estimées pour l'état {1,1,0} de l'événement précédent d'indice k-1, comme élément supplémentaire la longueur $l_k$-$s_{k-1}$ modifiée par l'état {1,0,1} de l'événement courant d'indice k.

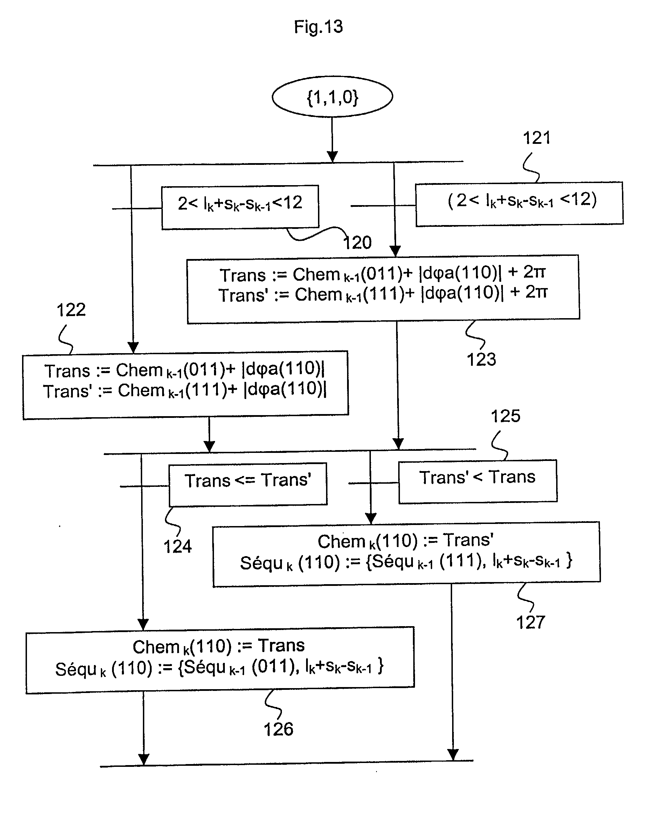

En référence à la figure 13 pour l'état {1,1,0} lié à l'événement d'indice k, deux états liés à l'événement précédent d'indice k-1, peuvent conduire à l'état {1,1,0}, à savoir les états {0,1,1} et {1,1,1}.

Dans une étape 122, le composant de correction 17 calcule deux distances Trans et Trans' de chemins possibles pour aboutir à l'état {1,1,0}.

La distance Trans est prise égale à la somme de la valeur absolue de l'erreur de phase aléatoire $d\varphi a(110)$ pour l'événement d'indice k et de la distance du chemin $Chem_{k-1}(011)$ pour aboutir à l'état {0,1,1} de l'événement d'indice k-1 qui peut précéder l'événement courant d'indice k.

La distance Trans' est prise égale à la somme de la valeur absolue de l'erreur de phase aléatoire dφa(110) pour l'événement d'indice k et de la distance du chemin Chem$_{k-1}$(111) pour aboutir à l'état {1,1,1} de l'événement d'indice k-1 qui peut précéder l'événement courant d'indice k.

A la suite de l'étape 122, une transition 124 est validée lorsque la distance Trans est inférieure ou égale à la distance Trans' et une transition 125 est validée lorsque la distance Trans' est inférieure à la distance Trans.

La transition 124 active une étape 126 dans laquelle le composant de correction 17 calcule la distance du chemin Chem$_k$(110) pour aboutir à l'état {1,1,0} de l'événement courant d'indice k et la séquence Séqu$_k$(110) des longueurs de symboles estimées pour l'état {1,1,0} de l'événement courant d'indice k. En prenant la distance de chemin Chem$_k$(110) égale à la distance Trans, celle-ci est la plus courte pour aboutir à l'état {1,1,0} de l'événement courant d'indice k car, par récursivité d'un calcul précédent pour l'état {0,1,1} de l'événement d'indice k-1, aucune distance de chemin n'était inférieure à la distance de chemin Chem$_{k-1}$(011) pour aboutir à l'état {0,1,1} de l'événement précédent. La séquence Séqu$_k$(110) des longueurs de symboles estimées pour l'état {1,1,0} de l'événement courant d'indice k, est obtenue en concaténant à la séquence Séqu$_{k-1}$(011) des longueurs de symboles estimées pour l'état {0,1,1} de l'événement précédent d'indice k-1, comme élément supplémentaire la longueur l$_k$+s$_k$-s$_{k-1}$ modifiée par l'état {1,1,0} de l'événement courant d'indice k.

La transition 125 active une étape 127 dans laquelle le composant de correction 17 calcule la distance du chemin Chem$_k$(110) pour aboutir à l'état {1,1,0} de l'événement courant d'indice k et la séquence Séqu$_k$(110) des longueurs de symboles estimées pour l'état {1,1,0} de l'événement courant d'indice k. En prenant la distance de chemin Chem$_k$(110) égale à la distance Trans', celle-ci est la plus courte pour aboutir à l'état {1,1,0} de l'événement courant d'indice k car, par récursivité d'un calcul précédent pour l'état {1,1,1} de l'événement d'indice k-1, aucune distance de chemin n'était inférieure à la distance de chemin Chem$_{k-1}$(111) pour aboutir à l'état {1,1,1} de l'événement précédent. La séquence Séqu$_k$(110) des longueurs de symboles estimées pour l'état {1,1,0} de l'événement courant d'indice k, est obtenue en concaténant à la séquence Séqu$_{k-1}$(111) des longueurs de symboles estimées pour l'état {1,1,1} de l'événement précédent d'indice k-1, comme élément supplémentaire la longueur l$_k$+s$_k$-s$_{k-1}$ modifiée par l'état {1,1,0} de l'événement courant d'indice k.

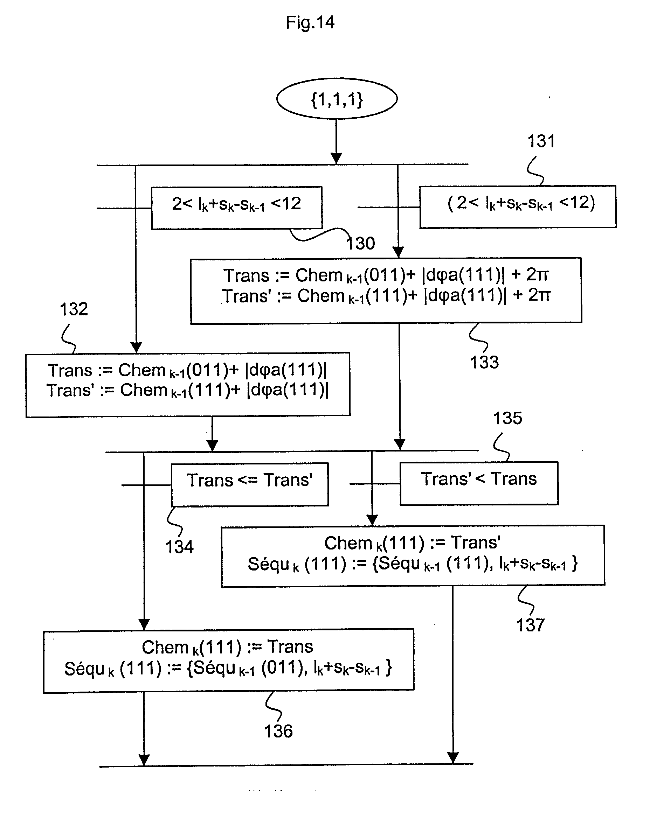

En référence à la figure 14 pour l'état {1,1,1} lié à l'événement d'indice k, deux états liés à l'événement précédent d'indice k-1, peuvent conduire à l'état {1,1,0}, à savoir les états {0,1,1} et {1,1,1}.

Dans une étape 132, le composant de correction 17 calcule deux distances Trans et Trans' de chemins possibles pour aboutir à l'état {1,1,1}.

La distance Trans est prise égale à la somme de la valeur absolue de l'erreur de phase aléatoire dφa(111) pour l'événement d'indice k et de la distance du chemin Chem$_{k-1}$(011) pour aboutir à l'état {0,1,1} de l'événement d'indice k-1 qui peut précéder l'événement courant d'indice k.

La distance Trans' est prise égale à la somme de la valeur absolue de l'erreur de phase aléatoire dφa(111) pour l'événement d'indice k et de la distance du chemin Chem$_{k-1}$(111) pour aboutir à l'état {1,1,1} de l'événement d'indice k-1 qui peut précéder l'événement courant d'indice k.

A la suite de l'étape 132, une transition 134 est validée lorsque la distance Trans est inférieure ou égale à la distance Trans' et une transition 135 est validée lorsque la distance Trans' est inférieure à la distance Trans.

La transition 134 active une étape 136 dans laquelle le composant de correction 17 calcule la distance du chemin Chem$_k$(111) pour aboutir à l'état {1,1,1} de l'événement courant d'indice k et la séquence Séqu$_k$(111) des longueurs de symboles estimées pour l'état {1,1,1} de l'événement courant d'indice k. En prenant la distance de chemin Chem$_k$(111) égale à la distance Trans, celle-ci est la plus courte pour aboutir à l'état {1,1,1} de l'événement courant d'indice k car, par récursivité d'un calcul précédent pour l'état {0,1,1} de l'événement d'indice k-1, aucune distance de chemin n'était inférieure à la distance de chemin Chem$_{k-1}$(011) pour aboutir à l'état {0,1,1} de l'événement précédent. La séquence Séqu$_k$(111) des longueurs de symboles estimées pour l'état {1,1,1} de l'événement courant d'indice k, est obtenue en concaténant à la séquence Séqu$_{k-1}$(011) des longueurs de symboles estimées pour l'état {0,1,1} de l'événement précédent d'indice k-1, comme élément supplémentaire la longueur l$_k$+s$_k$-s$_{k-1}$ modifiée par l'état {1,1,1} de l'événement courant d'indice k.

La transition 135 active une étape 137 dans laquelle le composant de correction 17 calcule la distance du chemin Chem$_k$(111) pour aboutir à l'état {1,1,1} de l'événement courant d'indice k et la séquence Séqu$_k$(111) des longueurs de symboles estimées pour l'état {1,1,1} de l'événement courant d'indice k. En prenant la distance de chemin Chem$_k$(111) égale à la distance Trans', celle-ci est la plus courte pour aboutir à l'état {1,1,1} de l'événement courant d'indice k car, par récursivité d'un calcul précédent pour l'état {1,1,1} de l'événement d'indice k-1, aucune distance de chemin n'était inférieure à la distance de chemin Chem$_{k-1}$(111) pour aboutir à l'état {1,1,1} de l'événement précédent. La séquence Séqu$_k$(111) des longueurs de symboles estimées pour l'état {1,1,1} de l'événement courant d'indice k, est obtenue en concaténant à la séquence Séqu$_{k-1}$(111) des longueurs de symboles estimées pour l'état {1,1,1} de l'événement précédent d'indice k-1, comme élément supplémentaire la longueur l$_k$+s$_k$-s$_{k-1}$ modifiée par l'état {1,1,1} de l'événement courant d'indice k.

On reconnaît dans les étapes qui viennent d'être décrites en référence aux figures 6 à 14, une mise en oeuvre particulière d'un détecteur de Viterbi pour améliorer la qualité d'estimation de longueurs de symboles sur des séquences plus longues que deux symboles tel que réalisé en référence à la figure 5. L'état xxx de chaque événement considéré d'indice k pour estimer une longueur de symbole à partir d'une longueur de symbole reçue $I_k$ de l'événement courant, prend en compte une estimation d'erreur aléatoire de phase dφa qui résulte d'une erreur de phase reçue dφ en fin de symbole de l'événement courant d'indice k pour effectuer une correction, état x1x, ou pas de correction, état x0x. L'estimation d'erreur aléatoire de phase dφa prend en compte une correction, état 1xx, ou une absence de correction, état 0xx, pour l'événement précédent et une correction, état xx1, ou une absence de correction, état xx0, pour l'événement suivant. L'état d'un événement d'indice k+1 ne dépend que de l'état d'un événement d'indice k, respectant ainsi un processus de Markov nécessaire à la mise en oeuvre d'un détecteur de Viterbi. La métrique utilisée est la valeur absolue de l'estimation d'erreur aléatoire de phase dφa dont le cumul sur un chemin pour aboutir à chaque état possible de l'événement courant d'indice k, est minimal.

Lorsqu'une longueur de symbole est connue en fin de séquence de symboles, il suffit de prendre parmi les huit états possibles de l'événement correspondant au dernier symbole reçu, l'état dont le chemin le plus court, donne la longueur connue. La séquence de longueurs de symboles correspondant à cet état est alors la meilleure estimation de séquence de longueurs de symboles reçus.

Il n'est pas toujours possible de déterminer une longueur connue de symbole en fin de séquence, par exemple pour une séquence infinie ou trop longue qui nécessiterait des ressources mémoires considérables.

Avantageusement en référence à la figure 6, le procédé conforme à l'invention comprend une étape 38 exécutée par le composant de correction 17 à la suite des étapes exécutées pour chacun des états possibles 000 à 111, précédemment décrites en référence aux figures 7 à 14.

Considérant une profondeur d de série Séqu$_k$(xxx) comme étant la quantité de derniers éléments de la série Séqu$_k$(xxx) obtenue pour l'état xxx de l'événement d'indice k, on sait que les huit plus courts chemins pour aboutir à chacun des huit états possibles de l'événement d'indice k, ont une forte probabilité de passer par un même état pour un événement d'indice k-d lorsque la profondeur d est suffisamment grande. Cette propriété est expliquée par exemple dans le dernier paragraphe de la page 272 de l'article de G. David Forney Jr "The Viterbi Algorithm, Proceedings of the IEEE, vol.61, n°3, March 1973, pages 268 à 278.

Dans l'étape 38, le composant de correction 17 retire le premier élément de huit séries Séqu$_k$(xxx) de d éléments, obtenues avant exécution de l'étape 38, de sorte à obtenir huit séries Séqu$_k$(xxx) de d-1 éléments après exécution de l'étape 38. Ainsi la place mémoire nécessaire dans le composant de correction 17 pour stocker les huit séries, est réduit à huit fois d mots, chaque mot étant prévu pour mémoriser un élément tel que par exemple une longueur de symbole $l_i$ avec i variant de 1 à k.

Le composant de correction 17 choisit parmi les huit éléments retirés, un élément qui donne une estimation $N_{k-d}$ de longueur de symbole pour l'événement d'indice k-d. Lorsque les huit plus courts chemins pour aboutir aux huit états xxx possibles de l'événement d'indice k, passent effectivement par un même état de l'événement d'indice k-d, les huit éléments retirés sont identiques et aucun critère de choix n'est nécessaire. Cependant, dans la pratique il se peut que les huit chemins ne passent pas tous par le même état pour l'événement d'indice k-d.

Pour remédier à ce problème, le composant de correction 17 peut utiliser un critère de choix basé par exemple sur un plus court chemin ou sur un vote majoritaire.

Le critère de choix basé sur un plus court chemin consiste à retenir l'élément d'indice k-d de la série qui correspond au plus court des huit chemins de l'événement d'indice k.

Le critère de choix basé sur un vote majoritaire consiste à retenir parmi les huit éléments d'indice k-d, celui qui apparaît avec une même valeur le plus grand nombre de fois ou si plusieurs éléments de valeurs distinctes apparaissent le même nombre de fois, à en retenir un de façon arbitraire. Il convient ici de noter que pour une longueur de symbole $l_{k-d}$ reçue, les huit éléments retirés ne peuvent prendre qu'une parmi cinq valeurs:

$$l_{k-d}-2, l_{k-d}-1, l_{k-d}, l_{k-d}+1, l_{k-d}+2$$

et donc qu'il existe au moins deux éléments de valeurs identiques.

Si d est pris suffisamment grand, on note que le critère de choix n'est pas indispensable car s'il existe un événement d'indice j pour j compris entre k-d et k pour lequel les huit plus courts chemins pour aboutir aux huit états possibles de l'événement d'indice k, passent par un même état, ces huit chemins passent par un unique plus court chemin pour aboutir à ce même état de l'événement d'indice j. Il existe alors un seul élément pour un seul état possible de chaque événement qui précède l'événement d'indice j.

Une valeur optimale de d peut être obtenue par simulations préalables à la réalisation du composant de correction 17.

A la suite de l'étape 38, une étape 39 est activée dans laquelle l'indice k est incrémenté en vue d'une validation suivante de la transition 36, de façon à boucler en temps réel le procédé pour des longueurs de symboles RLL et des erreurs de phase dφ reçues pour une suite d'événements d'indice k croissant.

Avant d'avoir traité d événements, une série en étape 38 est de profondeur inférieure à d. On peut prévoir dans le composant de correction 17, un test micro-logiciel pour retirer un premier élément de série lorsque la profondeur de série est égale ou supérieure à d.

Un moyen simple est d'agencer le composant de correction 17 avec un registre à décalage pour chaque série traitée. Le registre à décalage comprend d cellules recevant en entrée le dernier élément d'une série et générant en sortie le premier élément de cette série. Le contenu du registre à décalage étant décalé vers la sortie pour chaque exécution de l'étape 38.

En étape 37, huit erreurs déterministes de phases sont calculées à partir de cinq erreurs systématiques de phase en fin de premier symbole $PEp(l_k-2)$, $PEp(l_k-1)$, $PEp(l_k)$, $PEp(l_k+1)$, $PEp(l_k+2)$ possibles et de cinq erreurs systématiques de phase en début de deuxième symbole $PEc(l_{k+1}-2)$, $PEc(l_{k+1}-1)$, $PEc(l_{k+1})$, $PEc(l_{k+1}+1)$, $PEc(l_{k+1}+2)$ possibles. Les erreurs systématiques de phase PEp et PEc peuvent être préalablement déterminées pour chaque longueur de symbole possible et stockées en mémoire du composant de correction 17. Comme pour le procédé décrit en référence à la figure 5, il est possible aussi d'intercaler avant ou après l'étape 37 une étape semblable à l'étape 22, non représentée sur la figure 6. Les valeurs d'erreur systématiques de phase PEp et PEc sont initialisées à des valeurs prédéterminées en étape 33. Pour l'événement d'indice k, les erreurs systématiques de phase $PEp(l_k)$ et $PEc(l_{k+1})$ sont ajustées dans l'étape intercalée, par exemple au moyen des formules:

$$PEp(l_k) := [t \cdot PEp(l_k) + d\varphi_k] / [t + 1]$$

$$PEc(l_{k+1}) := [t \cdot PEc(l_{k+1}) - d\varphi_k] / [t + 1]$$

Une première variante du procédé permet de réduire la mémoire nécessaire du composant de correction 17.

En étape 33 ou 35, huit mots de d+2 bits, prévus pour stocker chacun une série $Séqu_{k-1}(xxx)$, d'indice k-1 égal à zéro, correspondant à un état {x,x,x} parmi huit états {0,0,0}, {0,0,1},{0,1,0}, {0,1,1}, {1,0,0}, {1,0,1}, {1,1,0}, {1,1,1}, sont par exemple nommés Motp000, Motp001, Motp010, Motp011, Motp100, Motp101, Motp110, Motp111. Les d-1 bits de poids fort de chaque mot sont initialisés à zéro. On considère les bits de poids fort à gauche du mot et les bits de poids faible à droite du mot. Les trois bits de poids faible du mot Motp000, sont initialisés à 000. Les trois bits de poids faible du mot Motp001, sont initialisés à 001. Les trois bits de poids faible du mot Motp010, sont initialisés à 010. Les trois bits de poids faible du mot Motp011, sont initialisés à 011. Les trois bits de poids faible du mot Motp100, sont initialisés à 100. Les trois bits de poids faible du mot Motp101, sont initialisés à 101. Les trois bits de poids faible du mot Motp110, sont initialisés à 110. Les trois bits de poids faible du mot Motp111, sont initialisés à 111.

En étape 35, l'erreur de phase $d\varphi_k$ est stockée dans la cellule d'entrée d'un premier registre à décalage qui comprend d+1 cellules. La longueur de symbole $l_k$ est stockée dans la cellule d'entrée d'un deuxième registre à décalage qui comprend d+1 cellules.

En étape 37, l'erreur de phase $d\varphi_{k+1}$ est stockée dans la cellule d'entrée du premier registre à décalage avec décalage du contenu des d autres cellules. La longueur de symbole $l_{k+1}$ est stockée dans la cellule d'entrée du deuxième registre avec décalage du contenu des d autres cellules.

En référence à la figure 7 pour l'état {0,0,0} de l'événement courant, les calculs de $Séqu_k(000)$ dans les étapes 66 et 67 sont remplacés par les calculs suivants. Un mot de d+2 bits, nommé par exemple Motc000 est destiné à contenir la série $Séqu_k(000)$.

En étape 66, le composant de correction 17 recopie dans les d+1 bits de poids fort du mot Motc000, les d+1 bits de poids faible du mot Motp000 et dans le bit de poids faible du mot Motc000, la valeur du bit de poids faible qui indique l'état courant, ici 0.

En étape 67, le composant de correction 17 recopie dans les d+1 bits de poids fort du mot Motc000, les d+1 bits de poids faible du mot Motp100 et dans le bit de poids faible du mot Motc000, la valeur du bit de poids faible qui indique l'état courant, ici 0.

En référence à la figure 8 pour l'état {0,0,1} de l'événement courant, les calculs de $Séqu_k(001)$ dans les étapes 76 et 77 sont remplacés par les calculs suivants. Un mot de d+2 bits, nommé par exemple Motc001 est destiné à contenir la série $Séqu_k(001)$.

En étape 76, le composant de correction 17 recopie dans les d+1 bits de poids fort du mot Motc001, les d+1 bits de poids faible du mot Motp000 et dans le bit de poids faible du mot Motc000, la valeur du bit de poids faible qui indique l'état courant, ici 0.

En étape 77, le composant de correction 17 recopie dans les d+1 bits de poids fort du mot Motc001, les d+1 bits de poids faible du mot Motp100 et dans le bit de poids faible du mot Motc001, la valeur du bit de poids faible qui indique l'état courant, ici 0.

En référence à la figure 9 pour l'état {0,1,0} de l'événement courant, les calculs de $Séqu_k(010)$ dans les étapes 86 et 87 sont remplacés par les calculs suivants. Un mot de d+2 bits, nommé par exemple Motc010 est destiné à contenir la série $Séqu_k(010)$.

En étape 86, le composant de correction 17 recopie dans les d+1 bits de poids fort du mot Motc010, les d+1 bits de poids faible du mot Motp001 et dans le bit de poids faible du mot Motc010, la valeur du bit de poids faible qui indique l'état courant, ici 0.

En étape 87, le composant de correction 17 recopie dans les d+1 bits de poids fort du mot Motc010, les d+1 bits de poids faible du mot Motp101 et dans le bit de poids faible du mot Motc010, la valeur du bit de poids faible qui indique l'état courant, ici 0.

En référence à la figure 10 pour l'état {0,1,1} de l'événement courant, les calculs de $Séqu_k(011)$ dans les étapes 96 et 97 sont remplacés par les calculs suivants. Un mot de d+2 bits, nommé par exemple Motc011 est destiné à contenir la série $Séqu_k(011)$.

En étape 96, le composant de correction 17 recopie dans les d+1 bits de poids fort du mot Motc011, les d+1 bits de poids faible du mot Motp001 et dans le bit de poids faible du mot Motc011, la valeur du bit de poids faible qui indique l'état courant, ici 1.

En étape 97, le composant de correction 17 recopie dans les d+1 bits de poids fort du mot Motc011, les d+1 bits de poids faible du mot Motp101 et dans le bit de poids faible du mot Motc011, la valeur du bit de poids faible qui indique l'état courant, ici 1.

En référence à la figure 11 pour l'état {1,0,0} de l'événement courant, les calculs de $Séqu_k(100)$ dans les étapes 106 et 107 sont remplacés par les calculs suivants. Un mot de d+2 bits, nommé par exemple Motc100 est destiné à contenir la série $Séqu_k(100)$.

En étape 106, le composant de correction 17 recopie dans les d+1 bits de poids fort du mot Motc100, les d+1 bits de poids faible du mot Motp010 et dans le bit de poids faible du mot Motc100, la valeur du bit de poids faible qui indique l'état courant, ici 0.

En étape 107, le composant de correction 17 recopie dans les d+1 bits de poids fort du mot Motc100, les d+1 bits de poids faible du mot Motp110 et dans le bit de poids faible du mot Motc100, la valeur du bit de poids faible qui indique l'état courant, ici 0.

En référence à la figure 12 pour l'état {1,0,1} de l'événement courant, les calculs de $Séqu_k(101)$ dans les étapes 116 et 117 sont remplacés par les calculs suivants. Un mot de d+2 bits, nommé par exemple Motc101 est destiné à contenir la série $Séqu_k(101)$.

En étape 116, le composant de correction 17 recopie dans les d+1 bits de poids fort du mot Motc101, les d+1 bits de poids faible du mot Motp010 et dans le bit de poids faible du mot Motc100, la valeur du bit de poids faible qui indique l'état courant, ici 1.

En étape 117, le composant de correction 17 recopie dans les d+1 bits de poids fort du mot Motc101, les d+1 bits de poids faible du mot Motp110 et dans le bit de poids faible du mot Motc101, la valeur du bit de poids faible qui indique l'état courant, ici 1.

En référence à la figure 13 pour l'état {1,1,0} de l'événement courant, les calculs de $Séqu_k(110)$ dans les étapes 126 et 127 sont remplacés par les calculs suivants. Un mot de d+2 bits, nommé par exemple Motc110 est destiné à contenir la série $Séqu_k(110)$.

En étape 126, le composant de correction 17 recopie dans les d+1 bits de poids fort du mot Motc110, les d+1 bits de poids faible du mot Motp011 et dans le bit de poids faible du mot Motc110, la valeur du bit de poids faible qui indique l'état courant, ici 0.

En étape 127, le composant de correction 17 recopie dans les d+1 bits de poids fort du mot Motc110, les d+1 bits de poids faible du mot Motp111 et dans le bit de poids faible du mot Motc110, la valeur du bit de poids faible qui indique l'état courant, ici 0.

En référence à la figure 14 pour l'état {1,1,1} de l'événement courant, les calculs de $Séqu_k(111)$ dans les étapes 136 et 137 sont remplacés par les calculs suivants. Un mot de d+2 bits, nommé par exemple Motc111 est destiné à contenir la série $Séqu_k(111)$.

En étape 136, le composant de correction 17 recopie dans les d+1 bits de poids fort du mot Motc111, les d+1 bits de poids faible du mot Motp011 et dans le bit de poids faible du mot Motc111, la valeur du bit de poids faible qui indique l'état courant, ici 1.

En étape 137, le composant de correction 17 recopie dans les d+1 bits de poids fort du mot Motc111, les d+1 bits de poids faible du mot Motp111 et dans le bit de poids faible du mot Motc111, la valeur du bit de poids faible qui indique l'état courant, ici 1.

Dans l'étape 38 en référence à la figure 6, le composant de correction 17 lit alors les trois bits de poids fort d'un mot Motpxyz selon un critère de choix tel qu'expliqué précédemment ou de n'importe quel mot Motpxyz où x, y et z valent 1 ou 0, si d est de valeur suffisamment grande pour que les trois bits de poids fort pour tous les mots Motpxyz donnent une même valeur.

Dans l'étape 38, l'erreur de phase $d\varphi_{k-d}$ reçue pour l'événement d'indice k-d est obtenue dans l'avant dernière cellule en sortie du premier registre à décalage. Les longueurs $l_{k-d}$ et $l_{k-d+1}$ pour l'événement d'indice k-d, sont obtenues dans l'avant dernière et la dernière cellule du deuxième registre à décalage. Selon l'état {0,0,0}, {0,0,1}, {0,1,0}, {0,1,1}, {1,0,0}, {1,0,1}, {1,1,0} ou {1,1,1}, donné par les trois bits de poids fort du mot Motpxyz, deux longueurs $N_{k-d}$ et $N_{k-d+1}$ sont estimées à partir des longueurs $l_{k-d}$ et $l_{k-d+1}$. Une erreur de phase aléatoire $d\varphi a(d\varphi_{k-d}, N_{k-d}, N_{k-d+1})$ est calculée de façon identique à l'erreur de phase aléatoire $d\varphi a(d\varphi_k, l_k, l_{k+1})$ pour le même état en étape 37.

La longueur estimée $N_{k-d}$ est transmise en sortie du composant de correction 17 pour être exploitée par le système. L'erreur de phase aléatoire $d\varphi a(d\varphi_{k-d}, N_{k-d}, N_{k-d+1})$ est transmise au composant à verrouillage de phase 16 pour être retranchée de l'erreur de phase courante de façon à réduire une dérive de phase sur une séquence de d symboles.

Avantageusement, l'erreur de phase aléatoire $d\varphi a(d\varphi_{k-d}, N_{k-d}, N_{k-d+1})$ est soustraite aux huit distances de chemin $Chem_k(xxx)$ pour éviter des risques de débordement de valeur pour une grande quantité de symboles.

Dans l'étape 39 qui suit l'étape 38, l'incrémentation de k n'est pas nécessaire car elle est implicite si le caractère k indique l'événement courant, la chaîne de caractères k-1 indique l'événement précédent et la chaîne de caractères k+1 indique l'événement suivant. Il suffit de réactualiser le contenu de chaque mot relatif à l'événement d'indice k-1 par le contenu du mot correspondant relatif à l'événement d'indice k. Ainsi en étape 39, l'incrémentation de k est remplacée par les recopies de mots suivants:

$$Motp000 := Motc000;$$

$$Motp001 := Motc001;$$

$$Motp010 := Motc010;$$

$$Motp011 := Motc011;$$

$$Motp100 := Motc100;$$

$$Motp101 := Motc101;$$

$$Motp110 := Motc110;$$

$$Motp111 : = Motc111;$$

$$Chem_{k-1}(000) := Chem_k(000);$$

$$Chem_{k-1}(001) := Chem_k(001);$$

$$Chem_{k-1}(010) := Chem_k(010);$$

$$Chem_{k-1}(011) := Chem_k(011);$$

$$Chem_{k-1}(100) := Chem_k(100);$$

$$\text{Chem}_{k-1}(101) := \text{Chem}_k(101);$$

$$\text{Chem}_{k-1}(110) := \text{Chem}_k(110);$$

$$\text{Chem}_{k-1}(111) := \text{Chem}_k(111);$$

Une deuxième variante du procédé, mise en oeuvre avec ou sans la première variante, permet de réduire considérablement la probabilité d'estimer une longueur de symbole en dehors d'un intervalle prédéterminé. Par exemple, lorsque les seules longueurs de symboles admissibles peuvent prendre des valeurs de trois à onze, les longueurs estimées pour chaque état possible, sont testées comme expliqué maintenant en référence aux figures 7 à 14.

En référence à la figure 7 pour l'état {0,0,0}, l'étape 62 n'est activée que par une validation d'une transition 60.

La transition 60 est validée lorsque la longueur estimée $l_k$ pour l'état {0,0,0} de l'événement courant, est strictement comprise entre deux et douze.

Si la transition 60 n'est pas validée, une transition 61 est validée par le complément de la condition de test, c'est à dire par le fait que la longueur estimée $l_k$ pour l'état {0,0,0} de l'événement courant, n'est pas strictement comprise entre deux et douze.

La transition 61 active alors une étape 63 qui surestime volontairement les deux distances Trans et Trans', de façon à augmenter la distance de chemin $\text{Chem}_k(000)$, calculée en étape 66 ou 67. Ceci tend à éliminer les chemins passant par l'état {0,0,0} de l'événement courant, dans les détections de chemins les plus courts pour les événements suivants.

Dans l'étape 63, une période T d'horloge avec par exemple T=2$\pi$, est ajoutée aux distances Trans et Trans' telles qu'elles auraient été calculées en étape 62.

En référence à la figure 8 pour l'état {0,0,1}, l'étape 72 n'est activée que par une validation d'une transition 70.

La transition 70 est validée lorsque la longueur estimée $l_k$ pour l'état {0,0,1} de l'événement courant, est strictement comprise entre deux et douze.

Si la transition 70 n'est pas validée, une transition 71 est validée par le complément de la condition de test, c'est à dire par le fait que la longueur estimée $l_k$ pour l'état {0,0,1} de l'événement courant, n'est pas strictement comprise entre deux et douze.

La transition 71 active alors une étape 73 qui surestime volontairement les deux distances Trans et Trans', de façon à augmenter la distance de chemin $\text{Chem}_k(001)$, calculée en étape 76 ou 77. Ceci tend à éliminer les chemins passant par l'état {0,0,1} de l'événement courant, dans les détections de chemins les plus courts pour les événements suivants.

Dans l'étape 73, une période T d'horloge avec par exemple T=2$\pi$, est ajoutée aux distances Trans et Trans' telles qu'elles auraient été calculées en étape 72.

En référence à la figure 9 pour l'état {0,1,0}, l'étape 82 n'est activée que par une validation d'une transition 80.

La transition 80 est validée lorsque la longueur estimée $l_k+s_k$ pour l'état {0,1,0} de l'événement courant, est strictement comprise entre deux et douze.

Si la transition 80 n'est pas validée, une transition 81 est validée par le complément de la condition de test, c'est à dire par le fait que la longueur estimée $l_k+s_k$ pour l'état {0,1,0} de l'événement courant, n'est pas strictement comprise entre deux et douze.

La transition 81 active alors une étape 83 qui surestime volontairement les deux distances Trans et Trans', de façon à augmenter la distance de chemin $\text{Chem}_k(010)$, calculée en étape 86 ou 87. Ceci tend à éliminer les chemins passant par l'état {0,1,0} de l'événement courant, dans les détections de chemins les plus courts pour les événements suivants.

Dans l'étape 83, une période T d'horloge avec par exemple T=2$\pi$, est ajoutée aux distances Trans et Trans' telles qu'elles auraient été calculées en étape 82.

En référence à la figure 10 pour l'état {0,1,1}, l'étape 92 n'est activée que par une validation d'une transition 90.

La transition 90 est validée lorsque la longueur estimée $l_k+s_k$ pour l'état {0,1,1} de l'événement courant, est strictement comprise entre deux et douze.

Si la transition 90 n'est pas validée, une transition 91 est validée par le complément de la condition de test, c'est à dire par le fait que la longueur estimée $l_k+s_k$ pour l'état {0,1,1} de l'événement courant, n'est pas strictement comprise entre deux et douze.

La transition 91 active alors une étape 93 qui surestime volontairement les deux distances Trans et Trans', de façon à augmenter la distance de chemin $\text{Chem}_k(011)$, calculée en étape 96 ou 97. Ceci tend à éliminer les chemins passant par l'état {0,1,1} de l'événement courant, dans les détections futures de chemins les plus courts pour les événements suivants.

Dans l'étape 93, une période T d'horloge avec par exemple T=2π, est ajoutée aux distances Trans et Trans' telles qu'elles auraient été calculées en étape 92.

En référence à la figure 11 pour l'état {1,0,0}, l'étape 102 n'est activée que par une validation d'une transition 100.

La transition 100 est validée lorsque la longueur estimée $l_k$-$s_{k-1}$ pour l'état {1,0,0} de l'événement courant, est strictement comprise entre deux et douze.

Si la transition 100 n'est pas validée, une transition 101 est validée par le complément de la condition de test, c'est à dire par le fait que la longueur estimée $l_k$-$s_{k-1}$ pour l'état {1,0,0} de l'événement courant, n'est pas strictement comprise entre deux et douze.

La transition 101 active alors une étape 103 qui surestime volontairement les deux distances Trans et Trans', de façon à augmenter la distance de chemin $Chem_k(100)$, calculée en étape 106 ou 107. Ceci tend à éliminer les chemins passant par l'état {1,0,0} de l'événement courant, dans les détections futures de chemins les plus courts pour les événements suivants.

Dans l'étape 103, une période T d'horloge avec par exemple T=2π, est ajoutée aux distances Trans et Trans' telles qu'elles auraient été calculées en étape 102.

En référence à la figure 12 pour l'état {1,0,1}, l'étape 112 n'est activée que par une validation d'une transition 110.

La transition 110 est validée lorsque la longueur estimée $l_k$-$s_{k-1}$ pour l'état {1,0,1} de l'événement courant, est strictement comprise entre deux et douze.

Si la transition 110 n'est pas validée, une transition 111 est validée par le complément de la condition de test, c'est à dire par le fait que la longueur estimée $l_k$-$s_{k-1}$ pour l'état {1,0,1} de l'événement courant, n'est pas strictement comprise entre deux et douze.

La transition 111 active alors une étape 113 qui surestime volontairement les deux distances Trans et Trans', de façon à augmenter la distance de chemin $Chem_k(101)$, calculée en étape 116 ou 117. Ceci tend à éliminer les chemins passant par l'état {1,0,1} de l'événement courant, dans les détections futures de chemins les plus courts pour les événements suivants.

Dans l'étape 113, une période T d'horloge avec par exemple T=2π, est ajoutée aux distances Trans et Trans' telles qu'elles auraient été calculées en étape 112.

En référence à la figure 13 pour l'état {1,1,0}, l'étape 122 n'est activée que par une validation d'une transition 120.

La transition 120 est validée lorsque la longueur estimée $l_k$+$s_k$-$s_{k-1}$ pour l'état {1,1,0} de l'événement courant, est strictement comprise entre deux et douze.

Si la transition 120 n'est pas validée, une transition 121 est validée par le complément de la condition de test, c'est à dire par le fait que la longueur estimée $l_k$+$s_k$-$s_{k-1}$ pour l'état {1,1,0} de l'événement courant, n'est pas strictement comprise entre deux et douze.

La transition 121 active alors une étape 123 qui surestime volontairement les deux distances Trans et Trans', de façon à augmenter la distance de chemin $Chem_k(110)$, calculée en étape 126 ou 127. Ceci tend à éliminer les chemins passant par l'état {1,1,0} de l'événement courant, dans les détections futures de chemins les plus courts pour les événements suivants.

Dans l'étape 123, une période T d'horloge avec par exemple T=2π, est ajoutée aux distances Trans et Trans' telles qu'elles auraient été calculées en étape 122.

En référence à la figure 14 pour l'état {1,1,1}, l'étape 132 n'est activée que par une validation d'une transition 130.

La transition 130 est validée lorsque la longueur estimée $l_k$+$s_k$-$s_{k-1}$ pour l'état {1,1,1} de l'événement courant, est strictement comprise entre deux et douze.

Si la transition 130 n'est pas validée, une transition 131 est validée par le complément de la condition de test, c'est à dire par le fait que la longueur estimée $l_k$+$s_k$-$s_{k-1}$ pour l'état {1,1,1} de l'événement courant, n'est pas strictement comprise entre deux et douze.

La transition 131 active alors une étape 133 qui surestime volontairement les deux distances Trans et Trans', de façon à augmenter la distance de chemin $Chem_k(111)$, calculée en étape 136 ou 137. Ceci tend à éliminer les chemins passant par l'état {1,1,1} de l'événement courant, dans les détections futures de chemins les plus courts pour les événements suivants.

Dans l'étape 133, une période T d'horloge avec par exemple T=2π, est ajoutée aux distances Trans et Trans' telles qu'elles auraient été calculées en étape 132.

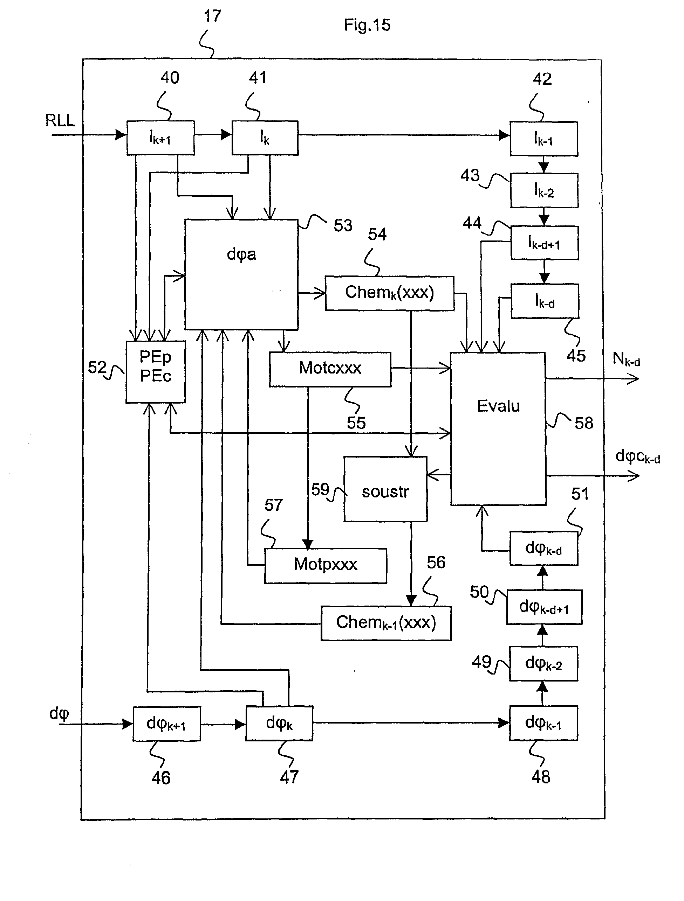

En référence à la figure 15, on décrit à présent le composant de correction 17 qui, dans sa version optimale, constitue un détecteur de Viterbi permettant d'estimer des longueurs de symboles sur des séquences de plusieurs symboles pour améliorer la qualité d'estimation.

Deux cellules mémoire 41, 47 sont prévues pour contenir chacune respectivement, la longueur de symbole $l_k$ et l'erreur de phase $d\varphi_k$ de l'événement traité courant pour lequel est reçu un premier symbole. Deux cellules mémoire 40, 46 sont prévues pour contenir chacune respectivement, la longueur de symbole $l_{k+1}$ et l'erreur de phase $d\varphi_{k+1}$ de l'événement suivant, la longueur de symbole $l_{k+1}$ étant considérée comme longueur de deuxième symbole pour l'événement courant. Un premier sous-composant 52 est prévu pour contenir une erreur systématique de phase PEp en fin de premier symbole reçu et une erreur systématique de phase PEc en début de deuxième symbole reçu, pour chaque longueur de symbole possible. Un deuxième sous-composant 53 est prévu pour calculer au moins une erreur aléatoire de phase $d\varphi a$ en fin de premier symbole suivi d'un deuxième symbole.

A chaque réception d'une longueur de symbole RLL et d'une erreur de phase $d\varphi$ en entrée du composant de correction 17, les valeurs reçues sont stockées respectivement dans la cellule 40 et dans la cellule 46 en repoussant le contenu des cellules 40 et 46, respectivement dans les cellules 41 et 47 tel que représenté sur la figure 15 par des flèches à pointe pleine.

Le sous composant 53 est agencé pour exécuter l'étape 23 ou l'étape 37 selon le procédé mis en oeuvre pour lequel il est prévu. Un micro-logiciel ou un circuit combinatoire du sous-composant 53 est agencé pour lire le contenu des cellules 40, 41, 42 et le contenu correspondant du sous-composant 52 pour calculer chaque erreur aléatoire de phase, tel que représenté sur la figure 15 par des flèches à pointe vide.

Par convention sur la figure 15, les flèches à pointe pleine représentent des transferts de zone mémoire à zone mémoire à chaque réception en entrée du composant 17, les flèches à pointe vide représentent des transferts de zone mémoire à sous-composant ou de sous-composant à zone mémoire entre deux réceptions successives en entrée du composant 17.

Le sous-composant 52 comprend en mémoire une table dont chaque ligne indexée par une longueur de symbole dans une plage qui englobe un intervalle prédéterminé de longueurs de symboles admissibles, contient une erreur systématique de phase en fin de premier symbole de longueur correspondante et une erreur systématique de phase en début de deuxième symbole de longueur correspondante. Avantageusement, le sous-composant 52 dispose de moyens de calcul pour ajuster les erreurs systématiques de phase en temps réel à partir du contenu des cellules 40, 41 et 47 tel que représenté sur la figure 15 par les flèches à pointe vide qui aboutissent sur le sous-composant 52, de façon à exécuter une étape du procédé tel que l'étape 22.

Le sous-composant 53 génère deux groupes de q valeurs, rangés chacun respectivement dans q mots mémoire 54 et dans q mots mémoire 55.

Chaque valeur rangée dans un mot mémoire 54, est fonction d'une valeur d'erreur aléatoire de phase calculée par le sous-composant 53. A chaque mot mémoire 54 correspond un mot mémoire 55 dans lequel est rangé une valeur fonction d'une longueur de symbole estimée pour la valeur d'erreur aléatoire de phase correspondante.

Pour mise en oeuvre du procédé décrit en référence à la figure 5, q=2. Deux mots mémoire 54 sont destinés à contenir chacun respectivement la valeur absolue d'erreur aléatoire de phase $|d\varphi a|$, $|d\varphi'a|$. Deux mots mémoires 55 sont destinés à contenir chacun respectivement une longueur de premier et une longueur de deuxième symbole pour chaque erreur aléatoire de phase. Le sous-composant 54 dispose alors de moyens arithmétiques et logiques pour exécuter l'étape 23. Un sous-composant 58 dispose de moyens arithmétiques et logiques pour exécuter les étapes 26 à 32.

Pour mise en oeuvre du procédé décrit en référence aux figures 6 à 14, q=8. Le sous-composant 53 dispose alors de moyens arithmétiques et logiques pour exécuter les transitions et étapes 36, 37, 60 à 67, 70 à 77, 80 à 87, 90 à 97, 100 à 107, 110 à 117, 120 à 127, 130 à 137, de façon à ranger les huit valeurs possibles $Chem_k(000)$, $Chem_k(001)$, $Chem_k(010)$, $Chem_k(011)$, $Chem_k(100)$, $Chem_k(101)$, $Chem_k(110)$, $Chem_k(111)$, dans les huit mots 54 et à ranger les huit valeurs possibles $Séqu_k(000)$, $Séqu_k(001)$, $Séqu_k(010)$, $Séqu_k(011)$, $Séqu_k(100)$, $Séqu_k(101)$, $Séqu_k(110)$, $Séqu_k(111)$, dans les huit mots 55. De façon préférée, chaque mot 55 comprend d+2 bits tels que les trois bits de poids faible donnent l'état de l'événement courant et les trois bits de poids fort donnent l'état de l'événement d réceptions plus tôt.

Pour mise en oeuvre du procédé décrit en référence aux figures 6 à 14, le composant de correction 17 comprend d cellules 42, 43, 44, 45 et d cellules 48, 49, 50, 51, d=4 sur l'exemple de la figure 15 mais d peut être plus petit ou plus grand, par exemple d=6 pour des mots 55 de huit bits ou d=14 pour des mots 55 de seize bits. Les cellules 40 à 45 constituent un registre à décalage de d+2 cellules pour empiler les longueurs de symbole reçues successivement. Les cellules 46 à 51 constituent un registre à décalage de d+2 cellules pour empiler les erreurs de phase reçues successivement.

Le sous-composant 58 dispose de moyens arithmétiques et logiques pour exécuter l'étape 38. En particulier, le sous-composant 58 reçoit le contenu d'au moins un mot 55 pour en retenir les trois bits de poids fort qui représentent l'état le plus probable de l'événement précédent de d réceptions, la réception d'une longueur de symbole pour l'événement courant. Recevant le contenu de la cellule 45 et de la cellule 51, le sous-composant dispose d'un circuit combinatoire simple pour déterminer le signe $s_{k-d}$, mémoriser le signe $S_{k-d-1}$ et pour générer une longueur de symbole estimée $N_{k-d}$ émise en sortie du composant de correction 17, telle que:

$$N_{k-d} = I_{k-d} + s_{k-d} - s_{k-d-1} \text{ pour un état } \{1,1,x\},$$

$$N_{k-d} = I_{k-d} - s_{k-d-1} \text{ pour un état } \{1,0,x\},$$

$$N_{k-d} = I_{k-d} + s_{k-d} \text{ pour un état } \{0,1,x\},$$

$$N_{k-d} = I_{k-d} \text{ pour un état } \{0,0,x\},.$$

D'autre part, recevant le contenu des cellules 44, 45 et de la cellule 51, un accès au sous-composant 52, permet au sous composant 58 de calculer une erreur de phase aléatoire $d\varphi c_{k-d}$ en utilisant la formule de l'étape 37 qui convient pour l'état reconnu sur les trois bits de poids fort du mot 55 retenu. L'erreur de phase aléatoire $d\varphi c_{k-d}$ calculée est émise en sortie du composant de correction 17.

A chaque réception par le composant de correction 17, le contenu de chaque mot 55 est transféré dans un mot 57 correspondant et le contenu de chaque mot 54 est transféré dans un mot 56 correspondant. Ainsi, une lecture des huit mots 57 permet au sous-composant 53 de connaître chacune des séries $Séqu_{k-1}(xxx)$ et une lecture des huit mots 56 permet au sous-composant 53 de connaître chacune des distances $Chem_{k-1}(xxx)$ de l'événement précédent, pour exécuter les étapes 66, 67, 76, 77, 86, 87, 96, 97, 106, 107, 116, 117, 126, 127, 136, 137.

Avantageusement, l'erreur de phase aléatoire $d\varphi c_{k-d}$ est aussi émise vers un sous-composant soustracteur 59 pour en retrancher la valeur absolue de chaque mot 54 avant transfert dans le mot 56.

Si le sous-composant d'évaluation 58 doit effectuer un test sur une plus courte distance $Chem_k(xxx)$ dans une exécution de l'étape 38, il reçoit aussi le contenu des mots 54. Pour une valeur de d suffisamment grande, ceci n'est pas nécessaire car il existe une probabilité quasi unitaire pour que les trois bits de poids fort soient les mêmes dans chacun des mots 55.

**Revendications**

1. Procédé pour évaluer une longueur de symbole à partir d'une réception d'une longueur de premier symbole et d'une erreur de phase sur une détection de longueur du premier symbole avant réception d'une longueur de deuxième symbole qui suit le premier symbole, **caractérisé en ce qu'**il comprend:

   - une première étape (23, 37) pour évaluer au moins deux erreurs aléatoires de phase à partir de l'erreur de phase reçue, une première erreur aléatoire de phase étant fonction d'une erreur déterministe de phase pour un premier état correspondant à une absence de correction de longueur de premier symbole, une deuxième erreur aléatoire de phase étant fonction d'une erreur déterministe de phase pour un deuxième état correspondant à une correction de longueur de premier symbole;
   - une deuxième étape (31, 38) pour retenir comme longueur de symbole évaluée la longueur de premier symbole reçue si la valeur absolue de la première erreur aléatoire de phase minimise une condition pour faire passer par le premier état et pour retenir comme longueur de symbole évaluée la longueur de premier symbole corrigée si la valeur absolue de la deuxième erreur aléatoire de phase minimise ladite condition pour faire passer par le deuxième état.

2. Procédé pour évaluer une longueur de symbole selon la revendication 1, **caractérisé en ce que** dans la première étape, la première erreur déterministe de phase pour un premier état correspondant à une absence de correction de longueur de premier symbole, est prise égale à une différence entre une erreur systématique de phase en fin de premier symbole et une erreur systématique de phase en début de deuxième symbole de longueurs non corrigées, la deuxième erreur déterministe de phase pour un deuxième état correspondant à une correction de longueur de premier symbole, est prise égale à une différence entre une erreur systématique de phase en fin de premier symbole et une erreur systématique de phase en début de deuxième symbole de longueurs corrigées respectivement par augmentation et diminution d'une période d'horloge.

3. Procédé pour évaluer une longueur de symbole selon la revendication 1
   ou 2, **caractérisé en ce que**:

- dans la première étape (37) sont évaluées pour un événement courant, huit erreurs aléatoires de phase dont quatre sont fonction d'une erreur déterministe de phase pour chacun de quatre premiers états correspondant à une absence de correction de longueur de premier symbole, dont quatre sont fonction d'une erreur déterministe de phase pour chacun de quatre deuxièmes états correspondant à une correction de longueur de premier symbole;
- dans la deuxième étape (38) la longueur de symbole retenue pour un événement précédent est celle correspondant à l'état de l'événement précédent pour lequel un cumul de valeurs absolue d'erreurs aléatoires pour chaque état d'événement allant de l'événement précédent à l'événement courant, est minimal.

4. Procédé pour évaluer une longueur de symbole selon l'une des revendications précédentes, **caractérisé en ce que** l'erreur aléatoire de phase associée à la longueur de symbole retenue, est utilisée pour ajuster une phase d'horloge servant à détecter la longueur de premier symbole.

5. Procédé pour évaluer une longueur de symbole selon la revendication 3, **caractérisé en ce que** le cumul de valeur absolue d'erreur aléatoire de phase est augmenté pour chaque état d'événement correspondant à une longueur de premier symbole en dehors d'un intervalle de longueurs admissibles.

6. Dispositif pour évaluer une longueur de symbole comprenant un composant de correction (17) agencé pour recevoir en entrée une longueur de premier symbole et une erreur de phase sur une détection de longueur du premier symbole puis pour recevoir une longueur de deuxième symbole qui suit le premier symbole, **caractérisé en ce que** le composant de correction (17) comprend:

- un premier sous composant (53) agencé pour évaluer au moins deux erreurs aléatoires de phase à partir de l'erreur de phase reçue, une première erreur aléatoire de phase étant fonction d'une erreur déterministe de phase pour un premier état correspondant à une absence de correction de longueur de premier symbole, une deuxième erreur aléatoire de phase étant fonction d'une erreur déterministe de phase pour un deuxième état correspondant à une correction de longueur de premier symbole;
- un deuxième sous composant (58) agencé pour retenir comme longueur de symbole évaluée la longueur de premier symbole reçue si la valeur absolue de la première erreur aléatoire de phase minimise une condition pour faire passer par le premier état et pour retenir comme longueur de symbole évaluée la longueur de premier symbole corrigée si la valeur absolue de la deuxième erreur aléatoire de phase minimise ladite condition pour faire passer par le deuxième état.

7. Dispositif pour évaluer une longueur de symbole selon la revendication 6, **caractérisé en ce qu'**il comprend un troisième sous-composant (52) contenant au moins pour chaque longueur de symbole possible une erreur systématique de phase en fin de premier symbole et une erreur systématique de phase en début de deuxième symbole, et **en ce que** le premier sous-composant (53) est agencé pour calculer la première erreur déterministe de phase par différence entre deux erreurs systématiques de phase contenues dans le sous composant (52) pour des longueurs non corrigées, et pour calculer la deuxième erreur déterministe de phase par différence entre deux erreurs systématiques de phase contenues dans le sous composant (52) pour des longueurs corrigées par augmentation et diminution d'une période d'horloge respectivement de longueur de premier et de deuxième symbole.

8. Dispositif pour évaluer une longueur de symbole selon la revendication 6 ou 7, **caractérisé en ce que**:

- le sous-composant (53) est agencé pour évaluer relativement à un événement courant, huit erreurs aléatoires de phase dont quatre sont fonction d'une erreur déterministe de phase pour chacun de quatre premiers états correspondant à une absence de correction de longueur de premier symbole, dont quatre sont fonction d'une erreur déterministe de phase pour chacun de quatre deuxièmes états correspondant à une correction de longueur de premier symbole;
- le sous-composant (58) est agencé pour retenir la longueur de symbole correspondant à l'état d'un événement précédent pour lequel est minimal le contenu d'au moins un mot (54) dans lequel le sous-composant (53) est agencé pour cumuler des valeurs absolue d'erreurs aléatoires de phase pour chaque état d'événement allant de l'événement précédent à l'événement courant.

9. Dispositif pour évaluer une longueur de symbole selon l'une des revendications 6 à 8, **caractérisé en ce que** le sous-composant (58) est agencé pour générer une valeur d'erreur aléatoire de phase associée à la longueur de symbole retenue, utilisable pour ajuster une phase d'horloge dans un composant à verrouillage de phase (16) agencé pour transmettre la longueur de premier symbole au composant de correction (17).

**10.** Dispositif pour évaluer une longueur de symbole selon la revendication 8, **caractérisé en ce que** le sous-composant (53) est agencé pour augmenter le contenu de chaque mot (54) pour chaque état d'événement correspondant à une longueur de premier symbole en dehors d'un intervalle de longueurs admissibles.

Fig.1

8

7

3

5

9

1

2

4

Fig.2

10    9    11    12    13

14

15

Fig.3

16    17

8    DPLL    RLL    ASEC    N

dφ

dφc

Fig.4

Fig.5

$$n := 3 \; ; \; i := 1$$
$$PEp(n, n=3\text{à}11) := 0$$
$$PEc(m, m=3\text{à}11) := 0$$
$$d\varphi p := 0 \text{ et } s := -1$$
$$d\varphi'p := 2\pi$$

20

32

$$n := m \text{ et } s := signe(d\varphi s)$$
$$d\varphi p := d\varphi s$$
$$d\varphi'p := \; d\varphi p - s2\pi$$

$$m = RLL \; ; \; d\varphi s = d\varphi$$

21

$$PEp(n) := [t \cdot PEp(n) + d\varphi p] / [t + 1]$$
$$PEc(m) := [t \cdot PEc(m) - d\varphi p] / [t + 1]$$

22

$$d\varphi a := d\varphi p - [PEp(n) - PEc(m)]$$
$$d\varphi'a := d\varphi'p - [PEp(n+s) - PEc(m-s)]$$

23

$$|d\varphi'a| >= |d\varphi a|$$

24

$$|d\varphi'a| < |d\varphi a|$$

25

$$d\varphi c := d\varphi a$$

26

$$n := n+s \text{ et } m := m-s$$
$$d\varphi c := d\varphi'a$$

27

$$i = 1$$

28

$$i > 1$$

$$i := i+1$$

30

$$N := n$$
$$d\varphi c \rightarrow$$

29

31

Fig.6

33

Init

34

$I_k = RLL ; d\varphi_k = d\varphi$

39

k := k+1

35

$Séqu_{k-1}(xxx) := \{ \}$

$I_{k+1} = RLL ; d\varphi_{k+1} = d\varphi$

36

$$d\varphi a(b_{k-1}b_k b_{k+1}) :=$$
$$d\varphi_k$$
$$- 2\pi s_k b_k$$
$$- PE(I_k + s_k b_k - s_{k-1} b_{k-1}, I_{k+1} - s_k b_k + s_{k+1} b_{k+1})$$

37

{0,0,0}    {0,1,0}    {1,0,0}    {1,1,0}

{0,0,1}    {0,1,1}    {1,0,1}    {1,1,1}

$N_{k-d}(Sequ)$

38

Fig.7

$\{0,0,0\}$

61

$2 < I_k < 12$    60

$( 2 < I_k < 12)$

Trans := Chem$_{k-1}$(000)+ |d$\varphi$a(000)| + 2$\pi$
Trans' := Chem$_{k-1}$(100)+ |d$\varphi$a(000)| + 2$\pi$

63

62

Trans := Chem$_{k-1}$(000)+ |d$\varphi$a(000)|
Trans' := Chem$_{k-1}$(100)+ |d$\varphi$a(000)|

65

Trans <= Trans'

Trans' < Trans

64

Chem$_k$(000) := Trans'
Séqu$_k$ (000) := {Séqu$_{k-1}$ (100), I$_k$ }

67

Chem$_k$(000) := Trans
Séqu$_k$ (000) := {Séqu$_{k-1}$ (000), I$_k$ }

66

Fig.8

71

$2 < l_k < 12$

$( 2 < l_k < 12)$

70

$Trans := Chem_{k-1}(000) + |d\varphi a(001)| + 2\pi$
$Trans' := Chem_{k-1}(100) + |d\varphi a(001)| + 2\pi$

72

$Trans := Chem_{k-1}(000) + |d\varphi a(001)|$
$Trans' := Chem_{k-1}(100) + |d\varphi a(001)|$

73

75

$Trans <= Trans'$

$Trans' < Trans$

74

$Chem_k(001) := Trans'$
$Séqu_k (001) := \{Séqu_{k-1} (100), l_k \}$

77

$Chem_k(001) := Trans$
$Séqu_k (001) := \{Séqu_{k-1} (000), l_k \}$

76

Fig.9

$\{0,1,0\}$

81

$2 < I_k + s_k < 12$

80

$(2 < I_k + s_k < 12)$

$\text{Trans} := \text{Chem}_{k-1}(001) + |d\varphi a(010)| + 2\pi$
$\text{Trans}' := \text{Chem}_{k-1}(101) + |d\varphi a(010)| + 2\pi$

82

$\text{Trans} := \text{Chem}_{k-1}(001) + |d\varphi a(010)|$
$\text{Trans}' := \text{Chem}_{k-1}(101) + |d\varphi a(010)|$

83

85

$\text{Trans} <= \text{Trans}'$

$\text{Trans}' < \text{Trans}$

84

$\text{Chem}_k(010) := \text{Trans}'$
$\text{Séqu}_k(010) := \{\text{Séqu}_{k-1}(101), I_k + s_k\}$

87

$\text{Chem}_k(010) := \text{Trans}$
$\text{Séqu}_k(010) := \{\text{Séqu}_{k-1}(001), I_k + s_k\}$

86

Fig.10

$\{0,1,1\}$

91

$2 < I_k + s_k < 12$

90

$(2 < I_k + s_k < 12)$

Trans := $Chem_{k-1}(001) + |d\varphi a(011)| + 2\pi$
Trans' := $Chem_{k-1}(101) + |d\varphi a(011)| + 2\pi$

92

93

Trans := $Chem_{k-1}(001) + |d\varphi a(011)|$
Trans' := $Chem_{k-1}(101) + |d\varphi a(011)|$

95

Trans <= Trans'

Trans' < Trans

94

$Chem_k(011)$ := Trans'
$Séqu_k(011)$ := $\{Séqu_{k-1}(101), I_k + s_k\}$

97

$Chem_k(011)$ := Trans
$Séqu_k(011)$ := $\{Séqu_{k-1}(001), I_k + s_k\}$

96

Fig.11

$\{1,0,0\}$

101

$2 < I_k - s_{k-1} < 12$

$(2 < I_k - s_{k-1} < 12)$

100

$\text{Trans} := \text{Chem}_{k-1}(010) + |d\varphi a(100)| + 2\pi$
$\text{Trans}' := \text{Chem}_{k-1}(110) + |d\varphi a(100)| + 2\pi$

102

103

$\text{Trans} := \text{Chem}_{k-1}(010) + |d\varphi a(100)|$
$\text{Trans}' := \text{Chem}_{k-1}(110) + |d\varphi a(100)|$

105

$\text{Trans} <= \text{Trans}'$

$\text{Trans}' < \text{Trans}$

104

$\text{Chem}_k(100) := \text{Trans}'$
$\text{Séqu}_k(100) := \{\text{Séqu}_{k-1}(110), I_k - s_{k-1}\}$

107

$\text{Chem}_k(100) := \text{Trans}$
$\text{Séqu}_k(100) := \{\text{Séqu}_{k-1}(010), I_k - s_{k-1}\}$

106

Fig.12

$\{1,0,1\}$

111

$2 < l_k - s_{k-1} < 12$

$( 2 < l_k - s_{k-1} < 12)$

110

Trans := Chem$_{k-1}$(010)+ |dφa(101)| + 2π
Trans' := Chem$_{k-1}$(110)+ |dφa(101)| + 2π

112

Trans := Chem$_{k-1}$(010)+ |dφa(101)|
Trans' := Chem$_{k-1}$(110)+ |dφa(101)|

113

115

Trans <= Trans'

Trans' < Trans

114

Chem$_k$(101) := Trans'
Séqu$_k$ (101) := {Séqu$_{k-1}$ (110), $l_k - s_{k-1}$ }

117

Chem$_k$(101) := Trans
Séqu$_k$ (101) := {Séqu$_{k-1}$ (010), $l_k - s_{k-1}$ }

116

Fig.13

$\{1,1,0\}$

121

$2 < l_k + s_k - s_{k-1} < 12$

$(\, 2 < l_k + s_k - s_{k-1} < 12\,)$

120

$\text{Trans} := \text{Chem}_{k-1}(011) + |d\varphi a(110)| + 2\pi$
$\text{Trans'} := \text{Chem}_{k-1}(111) + |d\varphi a(110)| + 2\pi$

122

123

$\text{Trans} := \text{Chem}_{k-1}(011) + |d\varphi a(110)|$
$\text{Trans'} := \text{Chem}_{k-1}(111) + |d\varphi a(110)|$

125

$\text{Trans} <= \text{Trans'}$

$\text{Trans'} < \text{Trans}$

124

$\text{Chem}_k(110) := \text{Trans'}$
$\text{Séqu}_k(110) := \{\text{Séqu}_{k-1}(111), l_k + s_k - s_{k-1}\}$

127

$\text{Chem}_k(110) := \text{Trans}$
$\text{Séqu}_k(110) := \{\text{Séqu}_{k-1}(011), l_k + s_k - s_{k-1}\}$

126

Fig.14

$\{1,1,1\}$

131

$2 < I_k + s_k - s_{k-1} < 12$

$( 2 < I_k + s_k - s_{k-1} < 12 )$

130

Trans := $\text{Chem}_{k-1}(011) + |d\varphi a(111)| + 2\pi$
Trans' := $\text{Chem}_{k-1}(111) + |d\varphi a(111)| + 2\pi$

132

133

Trans := $\text{Chem}_{k-1}(011) + |d\varphi a(111)|$
Trans' := $\text{Chem}_{k-1}(111) + |d\varphi a(111)|$

135

Trans <= Trans'

Trans' < Trans

134

$\text{Chem}_k(111)$ := Trans'
$\text{Séqu}_k(111)$ := $\{\text{Séqu}_{k-1}(111), I_k + s_k - s_{k-1}\}$

137

$\text{Chem}_k(111)$ := Trans
$\text{Séqu}_k(111)$ := $\{\text{Séqu}_{k-1}(011), I_k + s_k - s_{k-1}\}$

136

Fig.15

**Office européen
des brevets**

**RAPPORT DE RECHERCHE EUROPEENNE**

Numéro de la demande

EP 02 29 3027

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 1 022 858 A (SONY CORP) 26 juillet 2000 (2000-07-26) * le document en entier * --- | 1-10 | G11B20/10 G11B20/14 |
| A | EP 0 544 358 A (PHILIPS NV) 2 juin 1993 (1993-06-02) * colonne 1, ligne 17 - ligne 24 * * colonne 2, ligne 27 - ligne 55 * * colonne 6, ligne 32 - ligne 52 * ----- | 1-10 | |

**DOMAINES TECHNIQUES RECHERCHES (Int.Cl.7)**

G11B
H03M
H03L

Le présent rapport a été établi pour toutes les revendications

| Lieu de la recherche | Date d'achèvement de la recherche | Examinateur |
|---|---|---|
| LA HAYE | 6 février 2003 | Ogor, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 3027

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-02-2003

| Document brevet cité au rapport de recherche | | Date de publication | Membre(s) de la famille de brevet(s) | | Date de publication |
|---|---|---|---|---|---|
| EP 1022858 | A | 26-07-2000 | JP | 2000209096 A | 28-07-2000 |
| | | | CN | 1264123 A | 23-08-2000 |
| | | | EP | 1022858 A2 | 26-07-2000 |
| | | | TW | 464844 B | 21-11-2001 |
| | | | US | 6392569 B1 | 21-05-2002 |
| EP 0544358 | A | 02-06-1993 | DE | 69204144 D1 | 21-09-1995 |
| | | | DE | 69204144 T2 | 21-03-1996 |
| | | | EP | 0544358 A1 | 02-06-1993 |
| | | | JP | 3292521 B2 | 17-06-2002 |
| | | | JP | 5243991 A | 21-09-1993 |
| | | | KR | 243622 B1 | 01-02-2000 |
| | | | US | 5337335 A | 09-08-1994 |

EPO FORM P0460

Pour tout renseignement concernant cette annexe : voir Journal Officiel de l'Office européen des brevets, No.12/82